# EUROPEAN PATENT SPECIFICATION

(11) **EP 0 643 318 B1**
(45) Date of publication and mention of the grant of the patent: **02.01.2003**
(21) Application number: 94910556.3
(22) Date of filing: 29.03.1994
(51) Int. Cl.: G02F 1/1333

(54) **DISPLAY DEVICE AND ELECTRONIC APPARATUS**
ANZEIGEVORRICHTUNG UND ELEKTRONISCHER APPARAT
DISPOSITIF D'AFFICHAGE ET APPAREIL ELECTRONIQUE

(30) Priority: 29.03.1993 JP 7037993; 02.12.1993 JP 302993; 24.01.1994 JP 592794; 15.03.1994 JP 4414494
(43) Date of publication of application: 15.03.1995
(73) Proprietor: SEIKO EPSON CORPORATION, Shinjuku-ku, Tokyo 163-0811 (JP)
(72) Inventor: KOBAYASHI, Hidekazu, Suwa-shi, Nagano-ken 392 (JP); CHINO, Eiji, Suwa-shi, Nagano-ken 392 (JP); YAZAKI, Masayuki, Suwa-shi, Nagano-ken 392 (JP); IISAKA, Hidehito, Suwa-shi, Nagano-ken 392 (JP)
(74) Representative: Sturt, Clifford Mark
(86) International application number: PCT/JP94/00505
(87) International publication number: WO 94/023331

(56) References cited:
- EP-A- 0 238 164
- EP-A- 0 272 585
- EP-A- 0 563 403
- WO-A-89/09807
- WO-A-91/01511
- WO-A-92/19695
- DE-A- 4 007 039
- JP-A- 2 055 318
- JP-A- 2 278 230
- JP-A- 3 058 021
- JP-A- 60 147 681
- US-A- 5 021 188
- MOLECULAR CRYSTALS AND LIQUID CRYSTALS, LETTERS - SECTION, vol. 213, March 1992, READING GB, pages 117-131, XP002002205 R.A.HIKMET: "ELECTRICALLY INDUCED SCTTERING FROM ANISOTROPIC GELS..."
- APPLIED PHYSICS LETTERS, vol. 63, no. 11, September 1993, NEW YORK US, pages 1471-1473, XP002002206 J.WEST: "choslesteric/polymer dispersed light shutters"
- PATENT ABSTRACTS OF JAPAN vol. 16, no. 407 (P-1411) & JP-A-04 136814 (TOPPAN PRINTING), 11 May 1992,
- PATENT ABSTRACTS OF JAPAN vol. 12, no. 354 (P-761) & JP-A-63 106725 (NIPPON SHEET)
- PATENT ABSTRACTS OF JAPAN vol. 18, no. 78 (P-1689) & JP-A-05 289064 (DAINIPPON), 5 November 1993,
- Microfilm of the Specification and Drawings Annexed to the Written Application of Japanese Utility Model Application No. 46226/1989 (Laid-Open No. 138722/1990) (Mitsubishi Heavy Industries, Ltd.), November 20, 1990 (20.11.90), Table 1, (Family: none).

## Description

### Technical Field

The present invention relates to a reflective type of bright display element useful for displays of wrist watches, meter panels of automobiles, information apparatus terminals of electronic memorandum books, computers and televisions, or information bulletin boards, and to the construction and composition of an electronic apparatus using the same.

### Background Art

There have been developed various kinds of wrist watches, such as analogue-type watches with pointers, digital-type watches equipped with liquid crystal display elements. In recently, in addition to said types of watches, because of diversification of the information to be displayed, have been developed hybrid-type watches equipped with small window of liquid crystal, and two-layer-type watches in which liquid crystal display element is superposed on the surface of analogue-type watch with pointers (see Japanese Patent Application Laid-open Nos. 94940/1979, 136718/1979, 26986/1980, 46845/1980, 188786/1980, 23024/1981 and 65618/1981). In the field of watch and electronic memorandum books, there have now been developed various kinds of multifunctional-type ones carrying various kinds of functions. For these use, the development of a novel type of display element which may be a "new leader" of watches has been expected.

On the other hand, displays of electronic apparatuses for special use, for example a meter panel of automobile, are needed to display various kinds of information on a limited space. Furthermore, particularly in meter panel of automobile, the display mode to be employed should be selected from either analogue type or digital type.

On addition, in the field of information apparatus involving watches, the current trend has been going toward the compact and portable type, resulting in increasing demand for saving in electric power of the display element to be mounted them. In such portable information display apparatuses or information processing apparatuses, batteries have conventionally been used and, therefore, the lifetime of batteries to be used is an extremely important factor in use. From this viewpoint, apparatuses incorporating with a solar battery have recently been developed. In an apparatus disclosed in Japanese Patent Publication No. 61930/1991, for example, a liquid crystal display element and a solar battery are superposed on each other in order to provide space-saving of the apparatus. In Japanese Patent Application Laid-open No. 106725/1988 and so on, there are disclosed an apparatus having a structure in which a solar battery is placed surrounding to a liquid crystal display element, and practical embodiments of such apparatus using a display element in which liquid crystal is dispersed in polymer as capsule as a liquid crystal display element.

On the other hand, there has now been developed a bright, reflective-type display element with no polarizing plate by which the aforementioned problems can be solved or which is suitable for the use mentioned above. Such display element are, for example, those having a mode which becomes transparent in the presence of an applied electric field and is scattered in the absence of an electric field (which being simply referred to as "PDLC", hereinafter; see Japanese Patent Publication No. 501631/1983 and so on), and those having a mode which is scattered in the presence of an applied electric field and absorbs light or becomes transparent in the absence of a field (which being simply referred to as "reverse PDLC" hereinafter; see Japanese Patent Application Laid-open No. 227684/1992 which disclosing about a gel network type of reverse PDLC, Japanese Patent Laid-open No. 119302/1993 which disclosing about particle-orientation/dispersion type of reverse PDLC, and US Patent No. 4,994,204 which disclosing about a liquid crystal droplet-dispersion type of reverse PDLC). In all of these descriptions, for the purpose of increasing in refringent anisotropy of liquid crystals and polymers and to improve their scattering degree, liquid crystals or polymers having terphenyl skeleton or terphenyl skeleton containing hetero atom are used.

However, the conventional hybrid-type watches should be provided an analogue display part and a digital display part thereon separately, and therefore individual display areas become small, resulting in bad visibility. In addition, since the digital display part is a twisted nematic type one using a polarizing plate, the display itself is dark and the visibility becomes more worse. Furthermore, such hybrid-type watch is quite difficult in incorporation with a solar battery due to its areal limitation. In order to improve the disadvantages described above, a technical construction in which a solar battery and a liquid crystal display element are used with being superposed them on each other for a hybrid-type watch and an electronic computer was indeed valid as a patent. However, in this technique, the liquid crystal display element incorporated with a solar battery shows a low transmittance (e.g., a twisted nematic type of liquid crystal using a polarizing plate, shows a transmittance of 30% or less; a guest-host type of liquid crystal shows a transmittance of 60% or less), resulting in a lower production efficiency of electric power of the battery. Furthermore, since the display mode employs a dark reflector such as a solar battery as a background, the visibility of the watch becomes extremely worse. In addition, in case where a liquid crystal display element utilizing dynamic scattering effect is superposed on a solar battery, the display principle accompanies ionic flow, and therefore requires large electric power consumption. From these reasons, the combination of a liquid crystal display element with a solar battery was difficult.

On the other hand, in a display part of electronic apparatus for special use such as an on-vehicle-type meter panel, both of an analogue display and a digital display are sometimes incorporated in a limited display space. In this case, it is necessary to provide a large display space.

Recently, car navigation system, on-vehicle-type televisions and video projectors have been widely spread. In general, their displays are placed near the center console box, and a driver must turn his eyes to the assistant driver's seat each time he watches the display, which is quite dangerous.

The conventional on-vehicle-type meter panels and the like employ a self-emissive (spontaneous) light system or a backlight system. Therefore, they have such a disadvantage that they can not be seen well in the daytime when the surrounding becomes bright. In addition, some users might want to select either type of meter panel from analogue type and digital type according to the mood of the day.

In the conventional PDLCs or reverse PDLCs, since compounds shows a fluorescence emission at the visible region, such as those having terphenyl skeleton are used, for the purpose of improving refringent anisotropy, or the mismatch in refractive indices between a liquid crystal and a polymer employed, noticeable fluorescence and haze in the transparent state is caused. Therefore, good transparent state can not be given and, as the result, the display contrast becomes reduced; which are problems of the conventional PDLCs and reverse PDLCs. For example, in a PDLC, the transparency in the presence of an applied voltage becomes low, and when a light-absorbing layer is placed on the background, the color of the background looks turbid due to the fluorescence and haze of the liquid crystal layer.

On the other hand, in a reverse PDLC, because of the fluorescence and haze of a liquid crystal layer, the degradation of transparency in the absence of an applied voltages caused and, as the result, when a light-absorbing layer is placed on the background, the background color looks turbid: which are problems of the reverse PDLC.

A reverse PDLC into which dichroic dye is mixed in a liquid crystal and a light-reflective layer is placed on the background also has a problem that the colored state with the dichroic dye looks turbid in the absence of applied electric field due to fluorescence eliminated from the liquid crystal and haze, and results in degradation of display contrast.

In the conventional techniques, for the purpose of improving a scattering degree, a low molecular weight chiral component is contained in a liquid crystal. During the preparation process, a polymer precursor in a liquid crystal is polymerized to increase the content proportion of the low molecular weight chiral component in the liquid crystal; the increase in the content proportion of the low molecular weight chiral component makes the chiral pitch in the liquid crystal shorter. As the result, a mismatch between the twist structure of the polymer at the initial stage of the polymerization and that after the polymerization is caused, resulting in a haze of the display element in a transparent state in the absence of an applied electric field disadvantageously. Furthermore, such change in chiral pitch caused by the low molecular weight chiral component has a temperature dependency, which also causes a haze.

The generation of haze described above is a serious problem in a transparent-scattering switching mode containing no dichroic dye. For example, in the case used as a cover glass and a clockface of a watch, a haze generated in a transparent state of a display element makes the production value remarkably deteriorate. In case of a display element containing dichroic dye and placed a reflective layer on its backside, the display element employs the mode which light absorption and light scattering is switched. However, even in this case, the generation of fluorescence and haze also makes the display contrast in a light-absorbing state remarkably deteriorate.

Accordingly, the present invention have been done to solve these problems. That is, the object of the present invention is to provide a novel PDLC and reverse PDLC display element which are brighter than the conventional one in a scattering state, show less fluorescence and haze in a transparent state, show an improved display contrast, and in which a liquid crystal and polymer have a high reliability to heighten the reliability of the display element itself, and in which active element or a colour filter is used to apply to various uses. Another object of the present invention is to provide an electronic apparatus having a low electric power consumption and a quite novel value by combining a reverse PDLC with an electronic apparatus equipped with an arbitrary display apparatus or a solar battery. Still another object of the present invention is to provide a technique for the visibility improvement of such electronic apparatus.

### Disclosure of Invention

According to the present invention, there is provided an electronic apparatus comprising:
a display apparatus for displaying first information and comprising a surface adapted to be viewed by an observer when viewing the first information; and
a display element for displaying second information, wherein said display element is adapted to become transparent in the absence of an applied electric field and to have a light scattering state in the presence of an applied electric field, and wherein said display element is superposed on said surface of said display apparatus.

Further, the electronic apparatus is characterised in that said display element which becomes transparent in the absence of applied electric field is fabricated by placing a mixed solution of polymer or polymer precursor and liquid crystal between a pair of electrodes in a liquid crystalline state, and then causing a phase-separating of the polymer from the liquid crystal by a phase-separation means.

Furthermore, the electronic apparatus can be characterized in that a layer capable of reinforcing a reflection is placed on the backside of said display element. The layer is preferably made of a transparent material.

The electronic apparatus can be also characterized in that a liquid crystal element containing dichroic dye and equipped with an electric field application means is placed between said display element and an arbitrary display apparatus.

The display element and the electronic apparatus of the present invention can be also characterized in that the surface of the observer side of said display element is subjected to a non-glare treatment and/or an anti-reflection treatment.

The display element and the electronic apparatus can be further characterized in that at least one of the substrates used in said display element has a color filter formed on its surface facing to the liquid crystal.

The display element and the electronic apparatus can be still further characterized in that at least one of the substrates used in said display element has an active element formed on its surface facing to the liquid crystal.

Furthermore, the display element and the electronic apparatus can be characterized in that the liquid crystal to be used contains the following compounds: 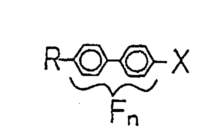 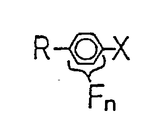 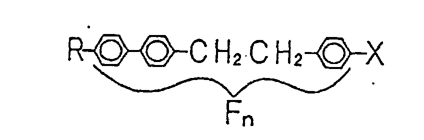 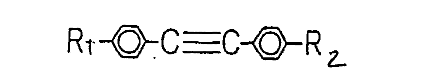 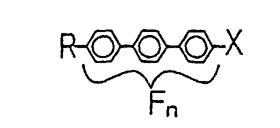 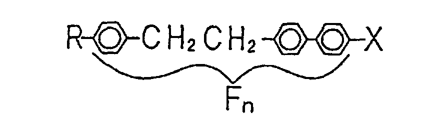 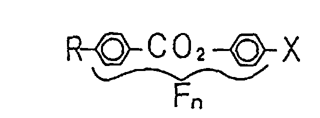 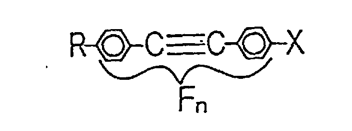 wherein n is an integer; R represents an alkyl, alkoxy, cycloalkyl or cycloalkoxy group; R1 and R1 independently represent an alkyl, cycloalkyl, alkoxy or cycloalkoxy group or H or F; and X represents H, F, Cl or CN.

The display element and the electronic apparatus can be also characterized in that the polymer to be used is prepared by polymerization using at least one polymer precursor selected from the following compounds: 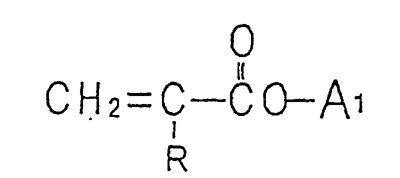 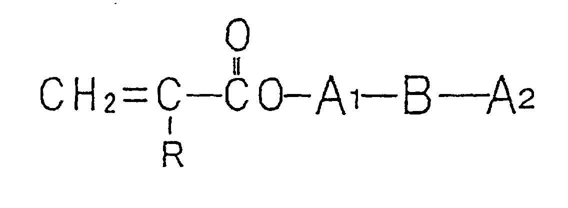 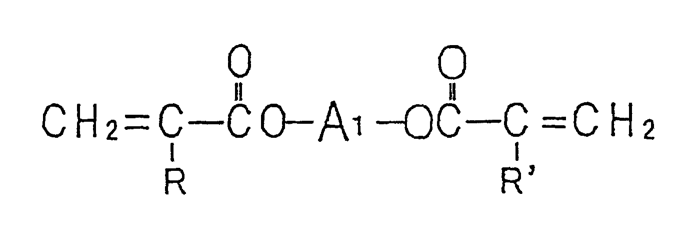 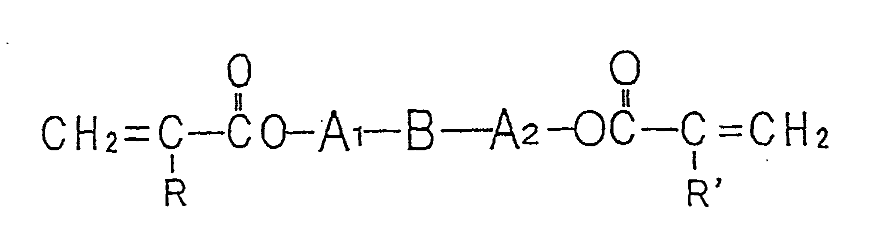 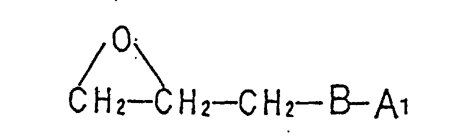 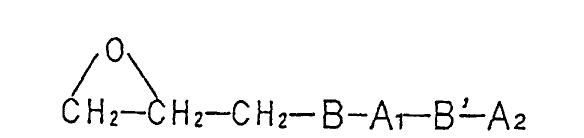 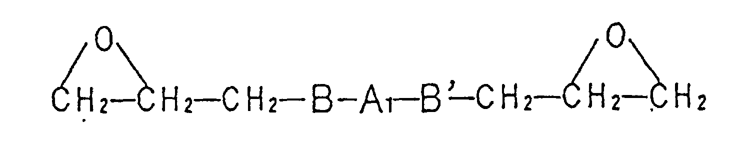 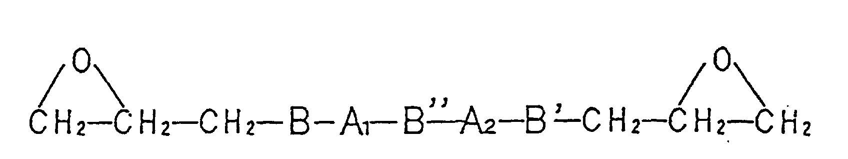 wherein R and R' independently represent H or CH3; B, B' and B" independently represent OCO, COO, OCONH, NHCOO, CONH, NHCO,
-C≡C-, an alkyl group, O, N or S; and A1 and A2 dependently represent a group containing aromatic ring, such as phenyl, biphenyl, terphenyl, quaterphenyl, naphthalene or anthracene, which may be partially substituted by halogen, alkyl or cyano group.

### Brief Description of Drawings

Fig. 1 illustrates the structure of the panel according to Example 2, in which a TFT element is formed.

Fig. 2 illustrates the structure of the panel according to Example 5.

Fig. 3 is a graph showing the electro-optic characteristic of the display elements according to Example 5 and Comparative Example 5.

Fig. 4 is a graph showing the electro-optic characteristic of the display elements according to Examples 6 and 7.

Fig. 5 is a graph showing the electro-optic characteristic of the display elements according to Example 8 and Comparative Example 6.

Fig. 6 illustrates the structure of the panel according to Example 12, in which a MIM element is formed.

Fig. 7 illustrates the structure of the panel according to Example 22, in which a color filter and a MIM element are formed.

Fig. 8 is a sectional view simply illustrating the structure of the information processing apparatus according to Example 23.

Fig. 9 simply illustrates the structure of the information display apparatus according to Example 24.

Fig. 10 simply illustrates the structure of the information display apparatus according to Example 25.

Fig. 11 is a sectional view simply illustrating the structure of the information display apparatus according to Example 26.

Figs. 12, 13 and 14 illustrate the electronic apparatus according to Example 27.

Figs. 15, 16 and 17 simply illustrate the structure of the electronic apparatus according to Example 28.

Fig. 18 is a graph showing the incidence angle-dependency of the reflectance given when light is incident upon a flat substrate surface.

### Description of Symbols

- 1: Substrate
- 2: Electrode
- 3: Liquid crystal/polymer layer
- 7: Reflective electrode
- 8: Substrate
- 9: Non-glare/anti-reflection layer
- 10: Color filter
- 12: Insulation layer
- 13: Signal electrode
- 14: Source electrode
- 15: Gate electrode
- 16: Semi-conductive layer
- 17: Drain electrode
- 18: Gate insulation layer
- 21: Display element
- 22: Solar battery
- 23: Touch panel
- 24: Information processing apparatus
- 25: Information display apparatus
- 26: Pointer of watch
- 27: Protective panel
- 28: Conventional display apparatus
- 29: Highly refractive layer
- 30: Conventional meter panel
- 31: Liquid crystal layer containing dichroic dye

### Best Mode for Carrying Out the Invention

The present invention will be illustrated in more detail by reference to the drawings attached in the followings.

According to the present invention, in a reverse PDLC, the turbidity of display in the absence of an applied electric field can be reduced by adding an adequate amount of dichroic dye or by using a liquid crystal or polymer having a low fluorescence quantum yield.

The amount of dichroic dye to be added may vary depending on the intended use. In the case where a display element must be transparent in the absence of an applied electric field and the reduction of haze is intended, for example, in the case where a solar battery or other type of display apparatus is placed on the backside of the display element, it is preferable to mix dichroic dye so that the light absorbance of the resulting display element becomes about 1 to 20%, preferably about 5 to 10%, by which the haze becomes less inconspicuous without impairing the transparency of the display. In the case where a reflective layer is placed on the backside of the display element to absorb the light in the absence of an applied electric field, dichroic dye is mixed so that the light absorbance of the resulting display element becomes not less than 20%, by which a good contrast can be given.

On the other hand, the turbidity of a display element in the absence of an applied electrical field can also be reduced by the use of liquid crystal or polymer exhibiting a small fluorescence quantum yield. Specific examples of such compounds include liquid crystals and polymer precursors having skeleton and showing approximately 0.3 or less of fluorescence quantum yield, such as tolane and biphenyl skeletons. If the compounds showing over 0.3 of fluorescence quantum yield, e.g. liquid crystals and polymer precursors having terphenyl skeleton, are used, emission of fluorescence is observed in a display state in the absence of an applied field, resulting in a bad display contrast.

In the fabrication process of a reverse PDLC, the polymer precursor in the liquid crystal is polymerized to become a polymer, whereby the proportion of the low molecular weight chiral component contained in the liquid crystal becomes higher; whereas the chiral polymer precursor in the liquid crystal is incorporated into the polymer, whereby its proportion in the liquid crystal is reduced. Therefore, the content ratio of the chiral component in the liquid crystal remains constant even when the polymerization proceeds, and the chiral pitch also remains constant. Owing to this principle, the twisted structure of polymer in the initial stage of the polymerization is identical to that in the liquid crystal after the polymerization, and the generation of haze in a transparent state in the absence of an applied field becomes remarkably small.

In the case where chiral component showing a small change in chiral pitch depending on temperature change is used, the orientation state of the liquid crystal become hard to be changed depending on temperature change after accomplishing the fabrication of a reverse PDLC. Therefore, the use of such chiral component make possible to prevent the generation of haze caused by temperature change. In this case, preferably used is the chiral component exhibiting the chiral pitch change by 20% or less in the temperature range where the display element is used.

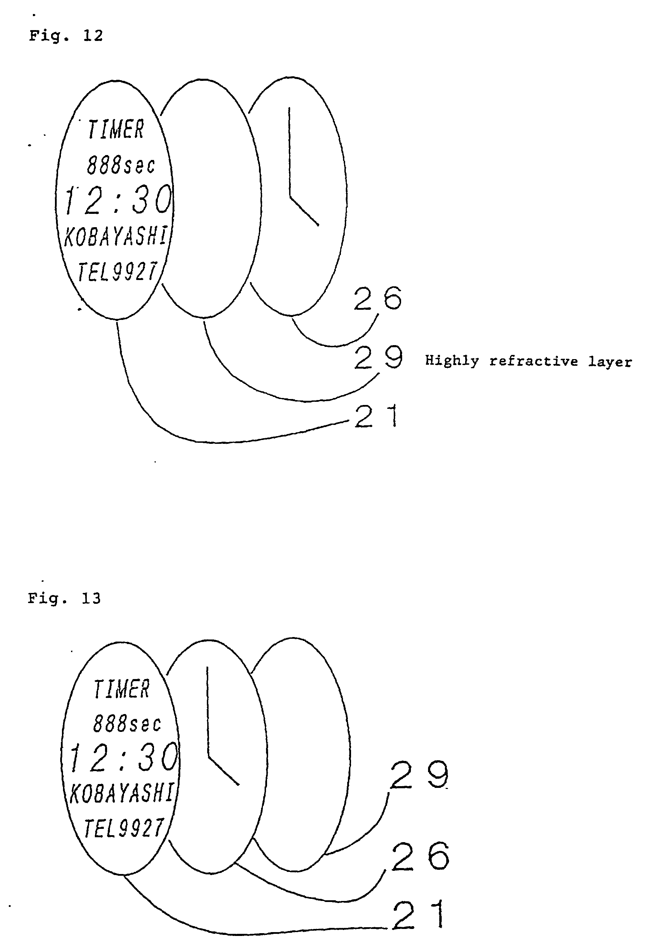

A reverse PDLC is almost transparent in the absence of an applied electric field. Accordingly, in the case where a reverse PDLC is placed on the surface of an arbitrary display apparatus, an observer can see the display of the display apparatus placed under the reverse PDLC. When an electric field is applied to the front reverse PDLC, an observer can see both the display of the display apparatus placed under the reverse PDLC and the white display of the front reverse PDLC at the same time, which caused by light scattering (see Fig. 10).

In this case, when a reflective layer, especially a transparent layer showing a high refractive index, is placed between the display apparatus of the backside and the reverse PDLC of the frontside, the light which is incident to the display apparatus from its surroundings enters into the reverse PDLC effectively and, as the result, the display can be seen bright with good contrast (see Fig. 12). Since the light which is incident from the front is not reflected so much, the display of the backside can be read off. This phenomenon can be understood better by reference to Fig. 18, in which the incidence angle-dependency of reflectance given at the light incidence to a flat substrate surface. The results in Fig. 18 were determined by calculation according to Fresnel's formula on the assumption that the refractive index of the substrate is 2 and is in contact with air (refractive index: 1), wherein natural light was decomposed into two orthogonal polarized lights for the calculation. Since this reflective layer is transparent, the display of the display apparatus placed under the reverse PDLC is never hard to be seen. Of course, equivalent display property can be given if many of these display elements are superposed on each other to become a multi layer form.

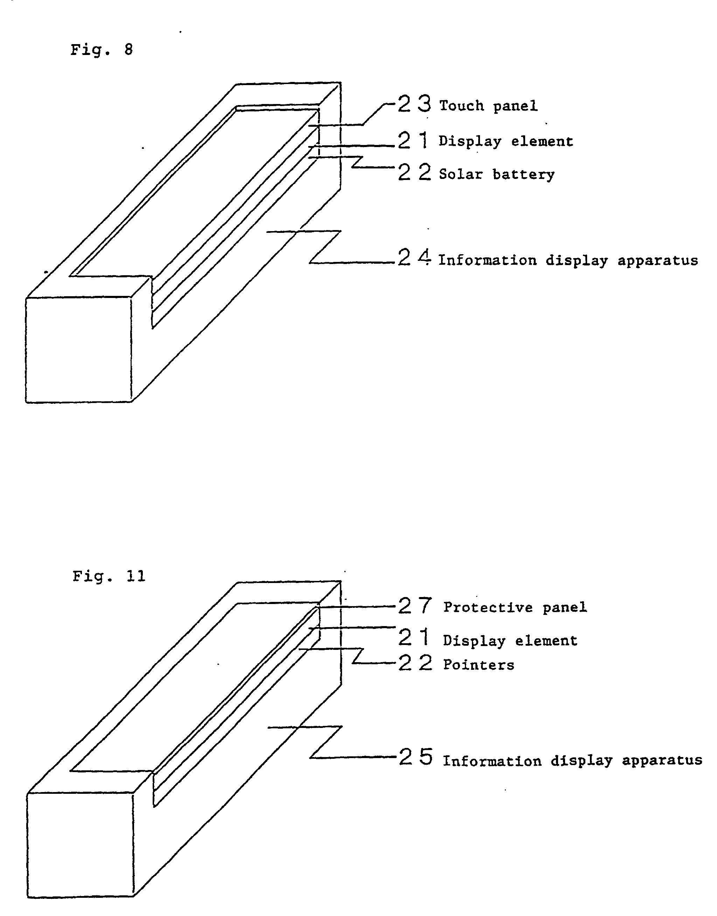

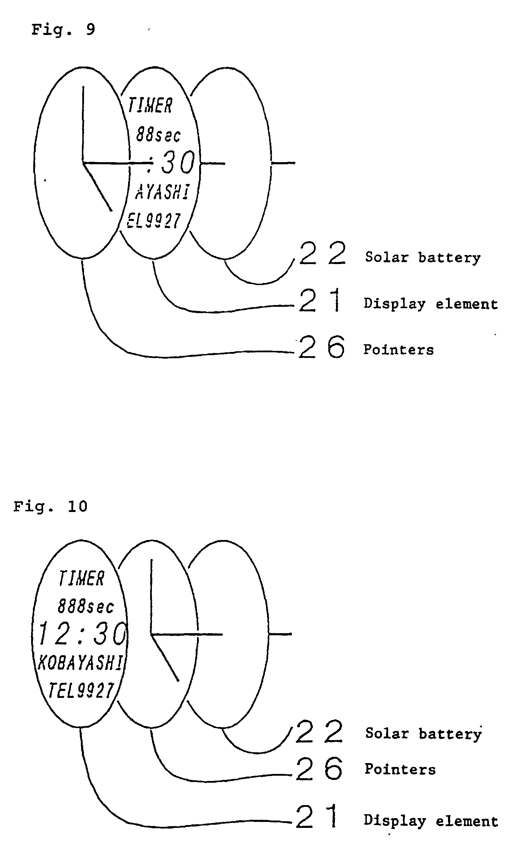

In the case where a liquid crystal layer containing dichroic dye, which is sandwitched between a part of electrodes, is placed between a display apparatus of the backside and a reverse PDLC of the frontside to make the display of the front display element more clear, the liquid crystal layer containing dichroic dye is rendered to a light absorbing state by the control of the electric field to be applied, whereby the display caused by the light scattering comes to stand out (see Fig. 9). Off course, the display can be more clear by inserting a highly refractive layer (see Fig. 8). In place of a reverse PDLC, a conventional PDLC may be used. In this case, in order to make clear the display of the display apparatus of the backside, the layer containing dichroic dye is made into transparent by the control of the electric field to be applied in the opposite way to that described above.

The reverse PDLC of the present invention is transparent in the absence of an applied electric field. Accordingly, when this display element is placed on the surface of a solar battery, the production efficiency of electric power of the solar battery is less impaired. As described above, a solar battery and a display element can be superposed on each other. As the result, not only the space-saving and miniaturization of the electronic apparatus using the display element become possible, but also the electronic apparatus can be designed more freely.

In the structures of the display elements and the electronic apparatus described above, active element or a color filter may be formed on either substrate used for the reverse PDLC to increase the display capacity of the display element and to provide a color display. When this display element is applied to a display for a car navigation system which was developed in recent, a driver can read off a map displayed on the system with leaving his face turning to the front and can drive extremely safely. Off course, the application to televisions is possible. The application to an electronic memorandum book, a compact, highly functional electronic memorandum book without running down of battery can be provided.

In addition, in the structures of the display elements and the electronic apparatus described above, a anti-reflection treatment or a non-glare treatment may be subjected to the surface substrate to improve visibility of the display elements.

(Example 1) This embodiment is a display element in which dichroic dye is mixed in a trace amount in order to make the haze of a reverse PDLC inconspicuous. In particular, in this embodiment, a liquid crystal composition to be used in Examples 2 to 4 is explained in the followings. That is, a guest-host type liquid crystal was prepared by mixing 99.25 wt% of a TL202 (trade name)/BL007 (trade name) mixture (7:3), both being produced by Merck Limited, as a liquid crystal, 0.25 wt% of G470 (a product by Nippon Kanko Shikiso Kenkyusho), 0.4 wt% of SI512 (a product by Mitsui Toatsu Senryo) and 0.1 wt% of M137 (a product by Mitsui Toatsu Senryo) as dichroic dyes. To 98 wt% of the resulting liquid crystal, was added 2 wt% of CNL617 (a product by Asahi Denka Kogyo, K.K.) as a chiral component and then mixed with each other, to give a chiral guest-host liquid crystal.

In case of a display element is combined with active element, the skeleton of a liquid crystal to be employed should be those having high reliability. As such liquid crystal, chlorine-based biphenyl liquid crystals such as TL202, TL205, TL213, TL215 and TL216 (products by Merck Limited) are preferably used. In addition, there may be used RDP 80616 and RDP 10248 (products by Rodic Inc.) and SS 5004 (a product by Chisso Corporation) as liquid crystal having high reliability, and BL007 (a product by Merck Limited) as highly birefractive liquid crystal. In other uses, liquid crystals having any skeleton may be used so long as they satisfy the driving voltage and birefractive index. Specific examples of liquid crystal compounds to be employed are those containing the following compounds: 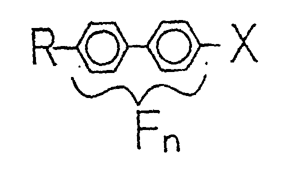 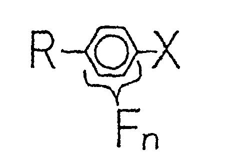 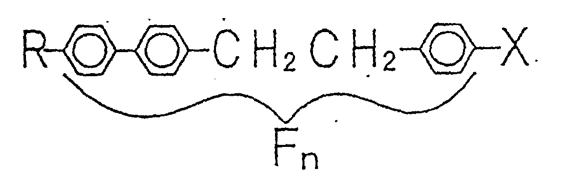 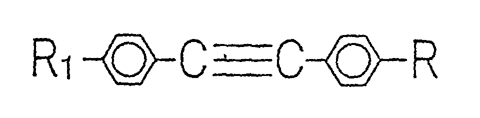 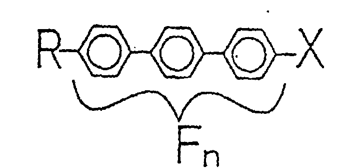 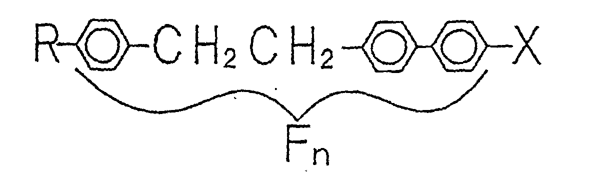 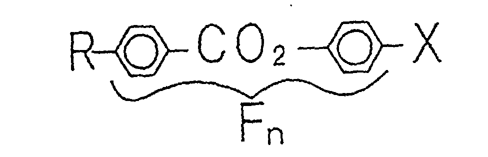 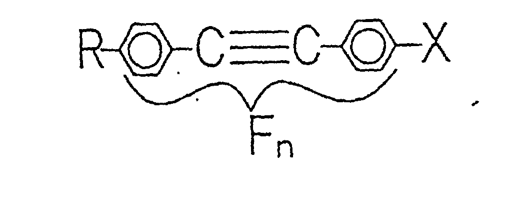 In the above-listed formulae, R represents an alkyl, cycloalkyl, alkoxy or cycloalkoxy group; R1 is an alkyl or alkoxy group, or hydrogen or fluorine; X represents a cyano group, halogen, hydrogen or a nitro group; and n is an integer. In addition, liquid crystals having negative dielectric anisotropy may be used as the liquid crystal. In this process, the alignment treatment to be subjected to the substrate surface is preferably the homeotropic alignment treatment.

As a dichroic dye to be used, any one may be used so long as it exhibits dichroism. However, from viewpoint of light resistance, as shown in this Example, anthraquinone-, naphthoquinone- and perylene-based ones are preferable. Furthermore, for the purpose of depressing a haze, dichroic dyes of dark tone and having a low fluorescence quantum yield are more preferable. In the case where a solar battery is used as the background, in order to prevent the lowering of production efficiency of electric power, the amount of dichroic dye to be mixed with liquid crystal is preferably the minimum amount to depress a haze. The degree of haze depends on the kinds of liquid crystals, polymer precursors, chiral components and polymerization conditions to be employed. Therefore, the concentration of the dichroic dye should be adjusted according to the actual circumstances.

As the chiral component to be used, any one may be used so long as it can twist the orientation of the liquid crystal, in an adequate amount. Preferably, the chiral component is those which can twist the orientation of a liquid crystal layer preferably by 90°, and more preferably 270°, in the direction of liquid crystal thickness. Examples of such chiral component include, for example, S811, R811, S1011, R1011, CB15, C15 and CE2 (products by Merck Limited), CM series (a product by Chisso Corporation), and CNL series (a product by Asahi Denka Kogyo, K.K.).

As the polymer precursor to be mixed with the above-described liquid crystals, any one may be used so long as it can be polymerized in the liquid crystal by irradiation of light, electron beam and heat and contains in its molecule a large mesogenic moiety having birefringency. The moiety to be polymerized of the polymer precursor is acrylate, methacrylate, crotonate, cinnamate, epoxy or the like; and the mesogenic moiety is phenyl, biphenyl, terphenyl, quaterphenyl, or the like. In the present invention, a suitable substituted group may be introduced into the polymer precursor for the purpose of improving birefringency and solibitity with the liquid crystal. In particular, a polymer precursor in which the moiety to be polymerized and the mesogenic moiety are bonded directly, the resulting polymer tends to become particulate. On the other hand, a polymer precursor in which the moiety to be polymerized and the mesogenic moiety is connected through a spacer such as an alkyl chain or a polymer precursor having plural of moieties to be polymerized in one molecule, the resulting polymer tends to form a gel-network structure. Examples of the former polymer precursors include the following compounds: 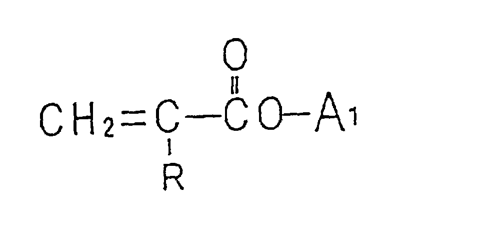 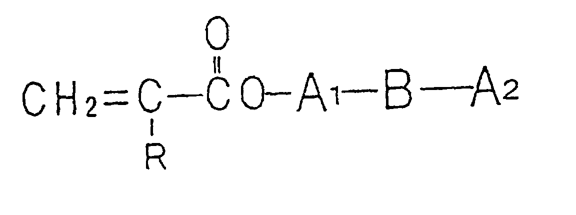 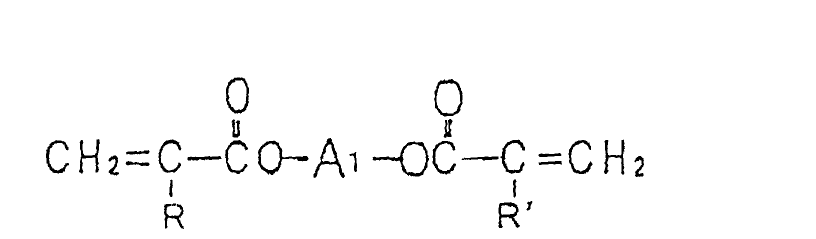 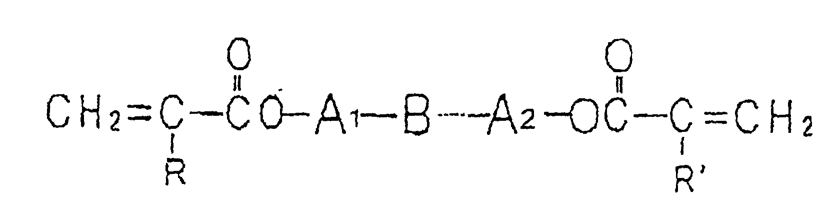 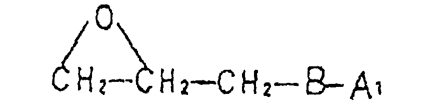 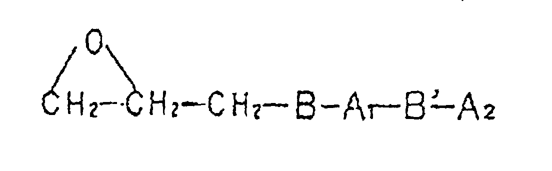 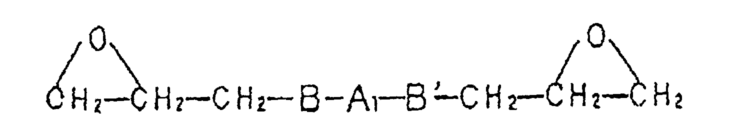 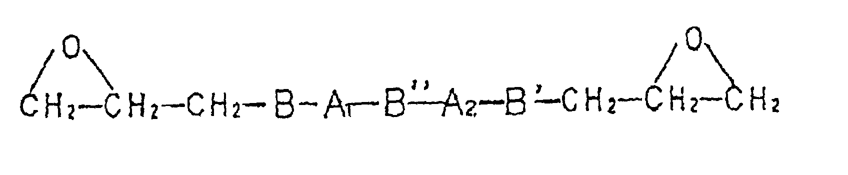 wherein R and R' independently represent H or CH3; B, B' and B" independently represent OCO, COO, OCONH, NHCOO, CONH, NHCO,
-C≡C-, an alkyl group, O, N or S; and A1 and A2 dependently represent a group containing aromatic ring, such as phenyl, biphenyl, terphenyl, quaterphenyl, naphthalene or anthracene, which may be partially substituted by halogen, alkyl or cyano group.

As the latter polymer precursors, among the monomers listed above, those which are di-functional and those which contain a spacer such as alkyl group between the moiety to be polymerized and the mesogenic moiety can be used. Examples of commercially available one include, for example, C6H produced by Philips Corporation; Aronix and Resedamacromonomer (trade names) produced by Toagosei Chemical Industry Co., Ltd.; KAYARAD and KAYAMER (trade names) produced by Nippon Kayaku Company, Ltd.; NOPCOMER, SICOMET and PHOTOMER (trade names) produced by San Nopco limited; Eptohto, Neotohto and Daptohto (trade names) produced by Tohto Kasei Co., Ltd.; ADEKA RESIN, ADEKA OPTOMER and ADEKA OPTON (trade names) produced by Asahi Denka Kogyo, K.K.; 2200 series (trade name) produced by Threebond Limited; Ripoxy and Spirac (trade names) produced by Showa Highpolymer Co., Ltd.; product produced by Nippon Polyurethane Inc., Co., Ltd.; and so on. These monomers may be mixed in part with the former monomers (i.e., monomers of which resulting polymers become particulate). In addition, other polymers such as thermoplastic polymers, e.g. ethyl cellulose, can also be used.

(Comparative Example 1) A liquid crystal composition is prepared according to Example 1, except using no dichroic dye. Other materials and fabrication conditions were same as Example 1.

(Example 2) In this embodiment, a polymer particle dispersed type of reverse PDLC was fabricated using the liquid crystal composition of Example 1, and then was examined its haze.

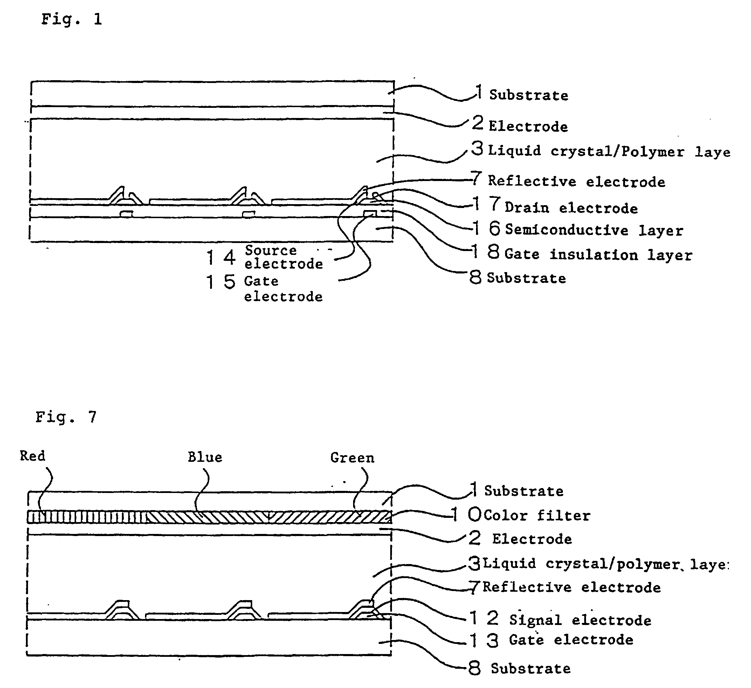

That is, a liquid crystal mixture was prepared by using biphenyl methacrylate as the polymer precursor indicated in Example 1 in an amount of 7 wt%, and then put into a void panel shown in Fig. 1 and sealed. At first, the fabrication process for this void panel is explained as follows. On the surface of a substrate 1, was formed a transparent electrode 2. Thereafter. the surface of the electrode 2 was subjected to an alignment treatment. Subsequently, on another substrate 8, was formed a TFT element as an active element. That is, the TFT element comprised a gate electrode 15, a gate insulation layer 18, a semi-conductive layer 16, a source electrode 14, a drain electrode, and aluminum was vapor-deposited as a reflective electrode. The surface of the electrode was further subjected to an alignment treatment. These two substrates were fixed to each other at their peripheries with setting their electrode sides face-to face and keeping a 5 µm gap therebetween. In this embodiment, the thickness of the liquid crystal was set to 5 µm; however, the thickness may be suitably set within the range from 3 to 10 µm depending on the intended use. This liquid crystal/ polymer precursor mixed layer was irradiated with UV ray of 300-400 nm in wave length and 3.5 mW/cm2 at the liquid crystal phase, to separate out the polymer particles from the liquid crystal. On the backside of the resulting display element, a solar battery was placed as a light-absorbing plate and the surface of the battery was subjected to a non-glare treatment and an anti-reflection treatment. Off course, these treatments are not always necessary, and even either treatment can sufficiently improve the visibility of the display element.

To the liquid crystal/polymer layer of the display element thus fabricated, a 5 V of driving voltage was applied, and then light was entered from the direction inclined by 20° based on the normal line of the display element surface, to determined the reflection light intensity to the normal line direction. As the result, the brightness was 30% based on that of a white paper. On the other hand, when the driving voltage was adjusted to 0 V to give a black display state, the reflectance measured was 4%.

In this embodiment, the alignment treatment used a polyimide aligning film and was carried out in the manner that a polyimide aligning film was formed and then was subjected to a rubbing treatment. However, in the general alignment treatment, other kind of aligning film may be used, or only rubbing treatment may be carried out without using any aligning film, or a LB film or an oblique evaporation film may be used.

The light-absorbing reflective plate to be placed on the backside of the display element is not necessarily be a solar battery. A light-absorbing plate applied with a light reflection treatment on its surface is also preferably used. The plate other than the light-absorbing reflective plates may also be used. For example, reflective plates made of aluminum, chromium and the like may be used. In case of reflective plates having high reflectance, visibility of the resultant can be improved by increasing in the amount of dichroic dye to be added.

In the display element of the present invention, color display becomes possible by forming a color filter on the substrate. In this case, as the colors to be used for the color filter, any one may be employed so long it shows good visibility according to the intended use, as well as the color combination which can reappear full colors. The color filter to be used is preferably composed of materials exhibiting no absorption in the UV region.

In the present invention, the display element is applied with a non-glare treatment and a anti-reflection treatment on its surface. However, such treatments are not so essential, and the display element without such treatments can show good display property.

In apparatuses having small-to-medium-sized capacity, such as watches, sufficient information can be given even if an active element is not formed thereon.

The active element to be used is not limited to the TFT element here shown, and other TFT elements having other structures, transistors, MIM elements, ferroelectric elements and the like may also be used. As the substrate to be formed with such active element thereon, can be employed, for example, semi-conductors such as glass, silicone, arsenic gallium and germanium, other inorganic substances and organic substances such as plastics. In the display element according to the present invention, all of a driver and a controller can be built or set into the substrates. Therefore, by using the display element, a display apparatus can be fabricated in extremely low cost.

(Comparative Example 2) A reverse PDLC was fabricated according to Example 2 using the liquid crystal composition of Comparative Example 1. The resulting reverse PDLC was examined its electro-optic characteristics in the same manner as Example 2. As the result, the brightness was 35% based on that of a white paper in the presence of an applied electric field. The reflectance in the absence of an applied electrical field was 8%.

(Example 3) A polymer gel network aligned type of liquid crystal display element was fabricated using the liquid crystal composition of Example 1.

That is, a display element was fabricated in the same manner as Example 2, using the liquid crystal composition of Example 1, 5 wt% of M6200 (a product by Toagosei Chemical Industry Co., Ltd.) as a polymer precursor and 2 wt% of Irugacure as a photopolymerization initiator.

To the liquid crystal/polymer layer of the resulting display element, a 10 V of driving voltage was applied, and then light was entered from the direction inclined by 20° based on the normal line of the display element surface, to determined the reflection light intensity to the normal line direction. As the result, the brightness was 28% based on that of a white paper in the presence of an applied electric field. The reflectance under a black display state in the absence of an applied electrical field was 8%.the brightness was 28% based on that of a white paper.

In this embodiment, the polymer precursor to be used may be other compound which can make a gel network effectively, as shown in Example 1.

Other conditions were same as those of Example 2.

(Comparative Example 3) A display element was fabricated according to Example 3, except using the liquid crystal composition of Comparative Example 1. The resulting display element showed a reflectance under the white display state of 33%, and a reflectance under the black display state of 5%.

(Example 4) A display element, in which droplets of the liquid crystal were aligned and dispersed in the polymer, was fabricated using the liquid crystal composition, and examined its haze.

That is, in the liquid crystal/polymer precursor mixture of Example 1, 30 wt% of M6200 (a product by Toagose Chemical Industry Co., Ltd.) as a polymer precursor and 2 wt% of Irugacure 184 (trade name) as a photopolymerization initiator were used. In this embodiment, other conditions were same as Example 2 to fabricate a display element.

To the liquid crystal/polymer layer of the resulting display element, a 20 V of driving voltage was applied, and then light was entered from the direction inclined by 20° based on the normal line of the display element surface, to determined the reflection light intensity to the normal line direction. As the result, the brightness was 28% based on that of a white paper. The reflectance under a black display state in the absence of an applied electrical field was 10 %.

In this embodiment, the polymer precursor to be used may be other compound which can make a gel network effectively, as shown in Example 1.

Other conditions were same as those of Example 2.

(Comparative Example 4) A display element was fabricated according to Example 4, except using the liquid crystal composition of Comparative Example 1. The resulting display element showed a reflectance under the white display state of 33%, and a reflectance under the black display state of 15%.

### (Example 5)

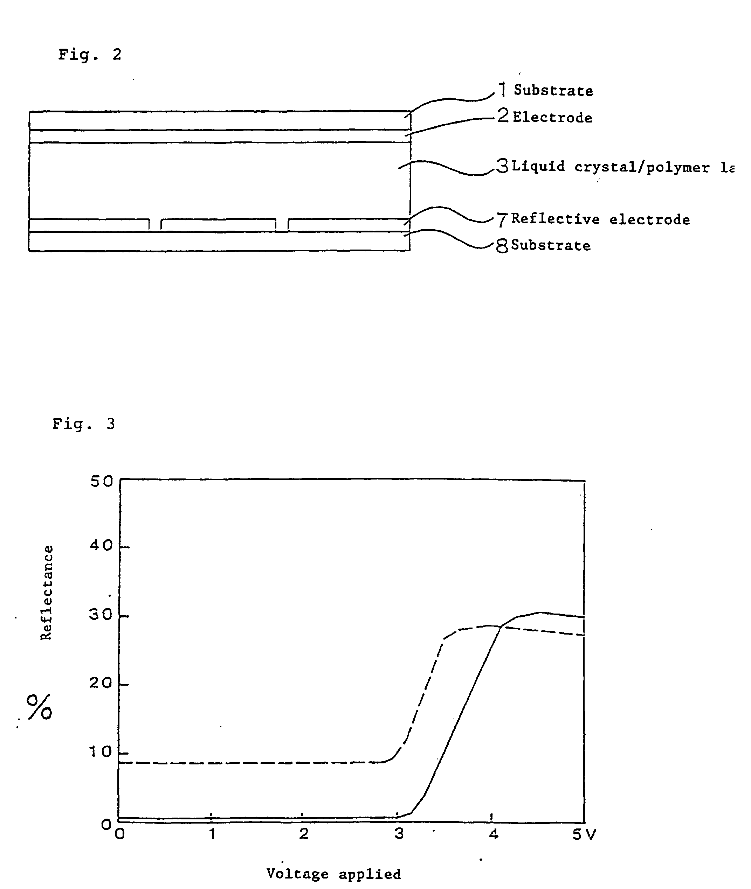

In this embodiment, are fabricated a reverse PDLC in which a tolane-based liquid crystal and a tolane-based polymer was used. Fig. 2 simply illustrates a partial sectional view of the display element according to this embodiment.

At first, a panel in which a liquid crystal/polymer precursor is to be put is explained in the followings. A transparent electrode having a desired pattern was formed on a substrate, and then a rubbing treatment was applied to the surface of the resultant. Two substrates thus fabricated were fixed at their peripheries with setting their electrode sides face-to-face and keeping a 4 µm gap therebetween.

Next, the liquid crystal and polymer precursor to be put into the panel are explained in the followings. As for the liquid crystal, was used a tolane-based liquid crystal comprising the following compound group I: 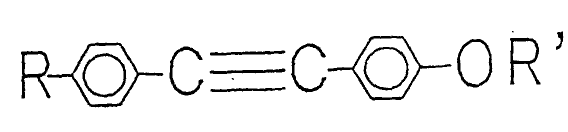 (wherein R and R' independently represent an alkyl group having 1 to 12 carbon atoms);
the following compound group II: 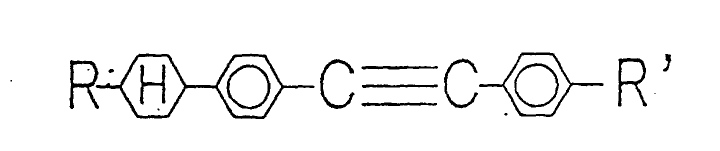 (wherein R and R' independently represent an alkyl group having 1 to 12 carbon atoms); and
the following compound group III: 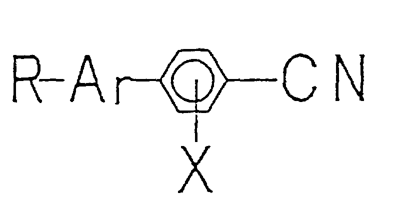 (wherein R represents an alkyl group having 1 to 12 carbon atoms; Ar represents phenyl, pyridine and pyrimidine; and X represents F or H),
as a mixture in a mixing ratio of 47 wt%: 33 wt%: 20 wt%, respectively. Each compound group to be used in this embodiment was composed of some compounds, and the number of carbon atoms of individual alkyl groups and their mixing ratio are shown in the followings:
Compound group I:
   (R = 1, R' = 11) 2 %
   (R = 3, R' = 2) 8 %
   (R = 4, R' = 1) 8 %
   (R = 4, R' = 2) 9 %
   (R = 4, R' = 3) 5 %
   (R = 5, R' = 1) 8 %
   (R = 5, R' = 3) 5 %
   (R = 5, R' = 11) 2 %;
Compound group II:
   (R = 3, R' = 2) 21 %
   (R = 4, R' = 2) 12 %; and
Compound group III:
   (R = 4) 6 %
   (R = 5) 7 %
   (R = 7) 7 %.

In this embodiment, the alkyl groups employed were straight chain type. However, branched type of alkyl groups may also be employed. With 98.5 wt% of the resulting liquid crystal, 1.5 wt% of a chiral component, R1011 (a product by Merck Limited), was mixed. With 95 wt% of this chiral liquid crystal, the following compounds, as polymer precursors, were mixed in the mixing ratio of 3.3 wt% and 1.7 wt%, respectively, to give a liquid crystal/polymer precursor mixture:

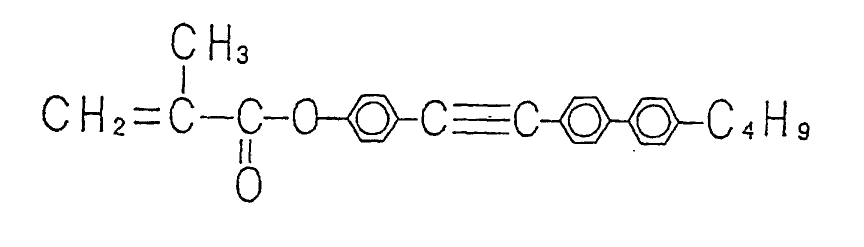

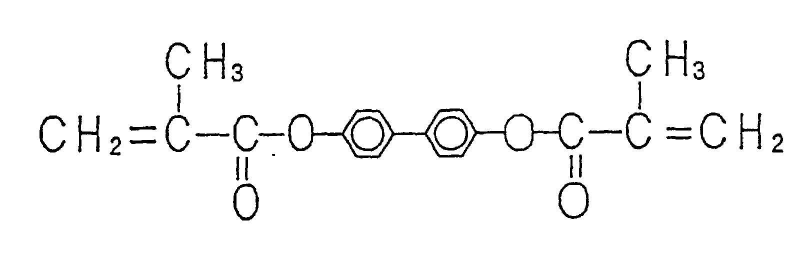

Subsequently, the mixture thus prepared was put into the aforementioned panel and sealed under a reduced pressure. Thereafter, UV ray of 300 to 400 nm in wave length and 3.5 mW/cm2 in intensity was irradiated to the resulting panel for 10 min. to polymerize the polymer precursors.

On the backside of the display element thus fabricated, a black light-absorbing plate was placed. Light was entered from the direction inclined by 20° based on the normal line of the display element surface to detect the light reflected to the normal direction, whereby a graph showing the electro-optic characteristic shown in Fig. 3 was given. In the graph of Fig. 3, the solid line indicates the electro-optic characteristic of the display element according to this embodiment. As shown in Fig. 3, since the transmittance was extremely high at the threshold voltage or below, the black caused by the light absorbing plate placed on the backside of the display element and, as the result, the contrast was 27.

The liquid crystal and polymer precursor to be used may be those indicated in Example 1. Among these, those which exhibit a low fluorescence quantum yield in the visible region and a high refringent anisotropy are preferable. In particular, those which have tolane or biphenyl skeleton in its molecule are more preferable. on the contrary, undesirable compounds are those which exhibit a high fluorescence quantum yield in the visible region, for example, compounds having anthracene, terphenyl or quaterphenyl skeleton or the compounds in which phenyl groups are connected to one another. On the other hand, in the compound groups I to III shown above, the combination of R and R' of alkyl groups or the mixing ratio of compounds is not limited to those indicated above, and may vary according to experimental and operational conditions such as temperature range of liquid crystal phase, driving voltage, and so on. In addition, other compounds may be mixed therewith.

As for chiral component, the kind and the mixing ratio are not limited to those indicated this embodiment, and those indicated in Example 1 may also be employed: they can vary according to the intended use.

The thickness of the liquid crystal/polymer layer is not limited to 4 µm, and may vary within the range of 2 to 20 µm, according to the intended use. With the decrease in thickness of the liquid crystal/polymer layer, the transparency in the absence of an applied voltage is increased, whereas the scattering degree is reduced. Oh the other hand, with the increase in the thickness, the scattering degree is increased, whereas the driving voltage required and the cloudiness in the absence of an applied electric field are increased.

The alignment treatment to be applied to the electrode surface may be carried out in such a manner that an aligning film is provided and a rubbing treatment is applied on the film.

The black absorption plate to be placed on the backside of the display element may be a solar battery or other reflective material.

### (Comparative Example 5)

This is a comparative embodiment to Example 5. In this embodiment, as a liquid crystal containing terphenyl skeleton compound, was used a mixture of TL202 (a product by Merck Limited) and 4-cyano-4"-pentyl-terphenyl (T15) in amounts of 80 wt% and 20 wt%, respectively. With 95 wt% of this liquid crystal composition, were mixed 4-terphenylmethacrylate and terphenyl-4,4"-dimethacrylate as polymer precursors in amounts of 3.3 wt% and 1.7 wt%, respectively. Other conditions are same as those in Example 5.

The display element thus fabricated was examined for its electro-optic characteristic in the same manner as Example 5. The results are shown in Fig 3 as a broken line. The display element was transparent at the threshold voltage or below, but fluorescence was observed in the visible region. As the result, the black background looked whitish and the contrast was reduced (approximately 3).

### (Example 6)

The display element fabricated in this embodiment is one in which a tolane-based liquid crystal showing no fluorescence emission in the visible region and a terphenyl-based polymer precursor showing fluorescence emission in the visible region are used. As the liquid crystal, one indicated in Example 5 was used. As the polymer precursor, terphenyl methacrylate and terphenyl dimethacrylate were used. Other constituent conditions were same as those of Example 5.

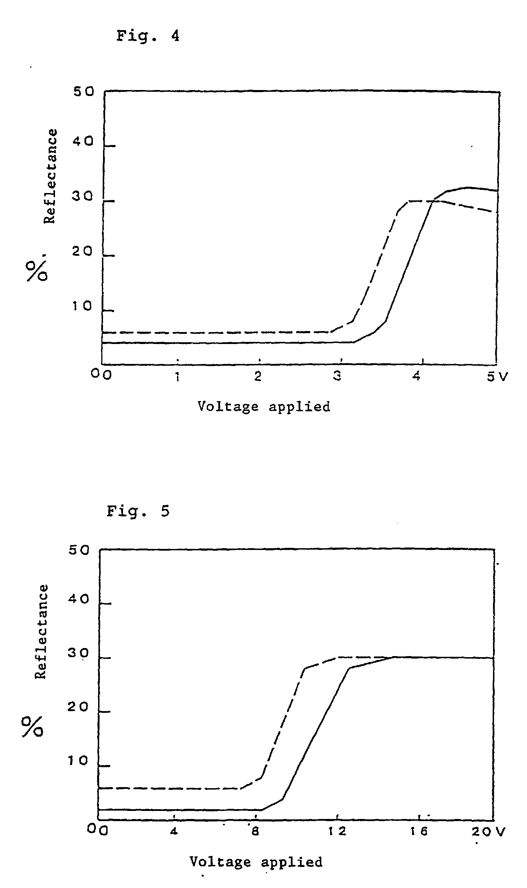

The display element thus fabricated was examined its electro-optic characteristic, and the results were shown in Fig. 4 as a solid line. When compared with the results of Example 5, the black display at the threshold voltage or below was somewhat whitish and the contrast was lowered (the contrast value being approximately 12).

### (Example 7)

The display element fabricated in this embodiment is one in which a tolane-based polymer showing no fluorescence emission in the visible region and a terphenyl-based liquid crystal showing fluorescence emission in the visible region are used. As the liquid crystal, one indicated in Comparative Example 5 was used. As the polymer precursor, tolane-based one indicated in Example 5 was used. Other constituent conditions were same as those of Example 5.

The display element thus fabricated was examined its electro-optic characteristic, and the results were shown in Fig. 4 as a broken line. When compared with the results of Example 5, the black display at the threshold voltage or below was somewhat whitish and the contrast was reduced (approximately 6).

### (Example 8)

The display element fabricated in this embodiment is one in which a liquid crystal and a polymer precursor showing less fluorescence emission in the visible region are used. As the liquid crystal, was used one indicated in Example 5. As the polymer precursor, was used C6H (a product by Philips Corporation) having the following formula: 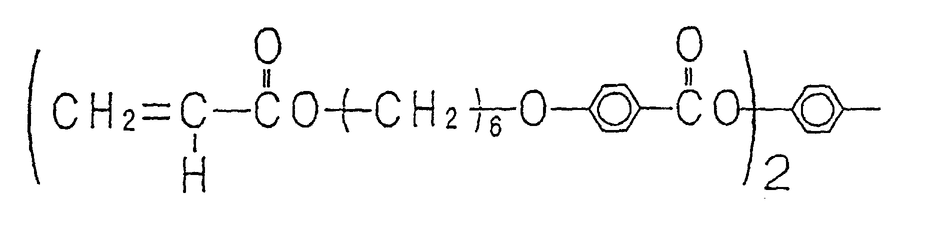 Other conditions were same as those of Example 5. The display element thus fabricated was examined its electro-optic characteristic (see Fig. 5, a solid line).

In this embodiment, any polymer precursor can be used so long as it can form a gel network structure when polymerized. In particular, the polymer precursors capable of making a gel network structure more effectively are those in which two polymerized moieties are contained and the moieties are combined through a long alkyl spacer. The difunctional monomers indicated in Example 1 are especially preferable.

The embodiment described above can be applied to other embodiments of the present invention.

### (Comparative Example 6)

The display element fabricated in this embodiment is fabricated in the same manner as Example, except using a liquid crystal showing a large fluorescence emission in the visible region. The liquid crystal used was E7 (a product by Merck Limited) which contains pentyl terphenyl carbonitrile sowing fluorescence emission.

The display element thus fabricated was examined its electro-optic characteristic, and the results are shown in Fig. 5 as a broken line. When compared with the display element of this Comparative Example, one of Example 8 is found to be improved in contrast.

### (Example 9)

The display element of this embodiment is fabricated according to Example 5, in which dichroic dye was mixed with the liquid crystal and the electrodes formed on the substrates were formed with reflective material, that is, a display element which absorbs light (i.e. light-absorbing mode) in the absence of an applied electric field. The void panel was fabricated according to the procedures of Example 2.

After rendering the gap of the panel under a reduced pressure, the liquid crystal/polymer precursor mixture indicated in Example 5 was further mixed with dichroic dyes of M361 : SI512 : M137 (products by Mitsui Toatsu Senryo) = 1.5 : 1.7 : 0.43 (wt%) and the resulting mixture was put into the panel and sealed. The UV ray of 300 to 400 nm in wave length and 3.5 mW/cm2 in intensity was irradiated to this panel at 40°C for 10 min., whereby the polymer precursor was polymerized and the resulting polymer separated out from the liquid crystal.

A non-glare film which had been subjected to anti-reflection treatment was applied on the surface of the resulting display element and then a light-absorbing layer was placed on the backside of the display element: thus a display apparatus, to which the display element of the present invention was applied, was accomplished. When a driver, a controller, an electric power for driving of display element and a computer (any of these being not shown in the drawings) are connected to this display apparatus, the computer screen could be displayed. Off course, if this display apparatus is connected to a television tuner, the television screen can be seen.

The dichroic dye to be used in this embodiment is preferably an anthraquinone-based or perylene-based dye exhibiting a good light resistance. and more preferably one exhibiting a good dichroism and solubility. The mixing amount of the dichroic dye should be considered to ensure a sufficient contrast.

In this embodiment, a reflective layer to be placed on the backside of the liquid crystal/polymer layer doubled as an electrode. However, it also be possible to use a transparent electrode and place a reflective layer on the backside of the display element.

In addition, a substrate on which an active element is formed can be placed either side of the liquid crystal/polymer layer.

A non-glare treatment and an anti-reflection treatment may be applied if necessary.

### (Example 10)

The display element of this embodiment employs the liquid crystal and the polymer precursor of Example 8, and further contains dichroic dye and uses the panel of Example 9. The liquid crystal and polymer employed were same as those of Example 8. With 96.7 wt% of the liquid crystal, dichroic dyes M361, SI512 and M34 (products by Mitsui Toatsu Senryo) were mixed in amounts of 1.3 : 1.6 : 0.4 (wt%), respectively. Into the panel fabricated in Example 9, the resulting liquid crystal/polymer precursor mixture was put and sealed. The UV ray was irradiated to this panel, to give a display element. A non-glare film which had been subjected to an anti-reflection treatment was applied on the surface of the resulting display element and then a light-absorbing layer was placed on the backside of the display element: thus a display apparatus, to which the display element of the present invention was applied, was accomplished. When a driver, a controller, an electric power for driving of display element and a computer (any of these being not shown in the drawings) are connected to this display apparatus, the computer screen could be displayed. Off course, if this display apparatus is connected to a television tuner, the television screen can be seen.

### (Example 11)

This embodiment is a display element incorporated with the haze reduction technique of the present invention. At first, a liquid crystal is explained. As a liquid crystal, a mixture of RDP80616-2 (a product by Rodic Inc.) and ML1009 (a product by Merck Limited), which both are liquid crystal showing a low fluorescence emission in the visible region, in a mixing ratio of 7:3 was used. With this liquid crystal mixture, 0.25 wt% of G470 (a product by Nippon Kanko Shikiso Kenkyujo), 0.4 wt% of SI512 (a product by Mitsui Toatsu Senryo) and 0.1 wt% of M137 (a product by Mitsui Toatsu Senryo) were mixed as dichroic dyes, to give a guest-host type liquid crystal. With the resulting liquid crystal, 2 wt% of CNL611 (a product by Asahi Denka Kogyo, K.K.) showing a low temperature dependency in chiral pitch was further mixed, whereby a chiral guest-host type liquid crystal was prepared. With this liquid crystal, butylphenyltolane methacrylate and biphenyl dimethacrylate as polymer precursors and the following compound as a chiral polymer precursor were mixed in amounts of 3.3 wt%, 1.7 wt% and 0.3 wt%, respectively. 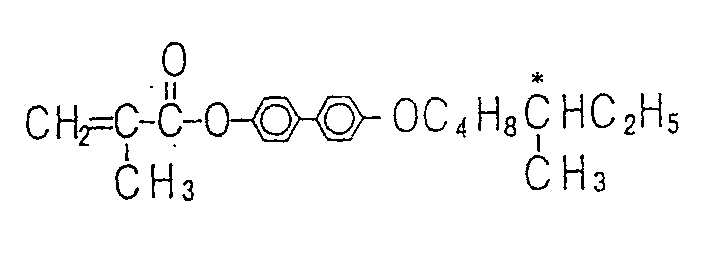 The resultant was put into said void panel and sealed. The UV ray was irradiated to this panel at 50°C. The display element thus fabricated may be subjected to a non-glare treatment or an anti-reflection treatment on its surface.

On backside of the resulting display element, a solar battery was placed, to give a reflection type of display element. This display element was determined for reflectance in the absence of an applied electric field in the same manner as Example 2. As the result, the reflectance at 20°C was 1%. This display element could be used for segment display for watch by application of an electric field. Furthermore, this display element could employ a solar battery placed on its backside as a driving power source for liquid crystal.

In this embodiment, an active element was not used. However, if used, same effect might be given. In such case, the liquid crystal having a good retentivity should be used, as shown in Example 1. If incorporating with a color filter, a bright color display can be provided. In the case where no active element is used, any material may be employed as a liquid crystal so long as it shows a nematic type liquid crystal phase.

The thickness of the liquid crystal/polymer layer is preferably 3 to 10 µm. Too thin layer leads a low scattering property, whereas too thick layer not only makes the required driving voltage higher but also make decrease in contrast; which are practically disadvantageous.

In stead of the solar battery, a light-absorbing layer and a light-reflective layer may be placed on the backside of the display element. If without placing anything on the backside, this display element can also display as white scattering on a transparent glass.

In this embodiment, other materials and fabrication conditions were same as those of Example 12. The chiral components shown in Example 15 may also be used in this embodiment.

### (Example 12)

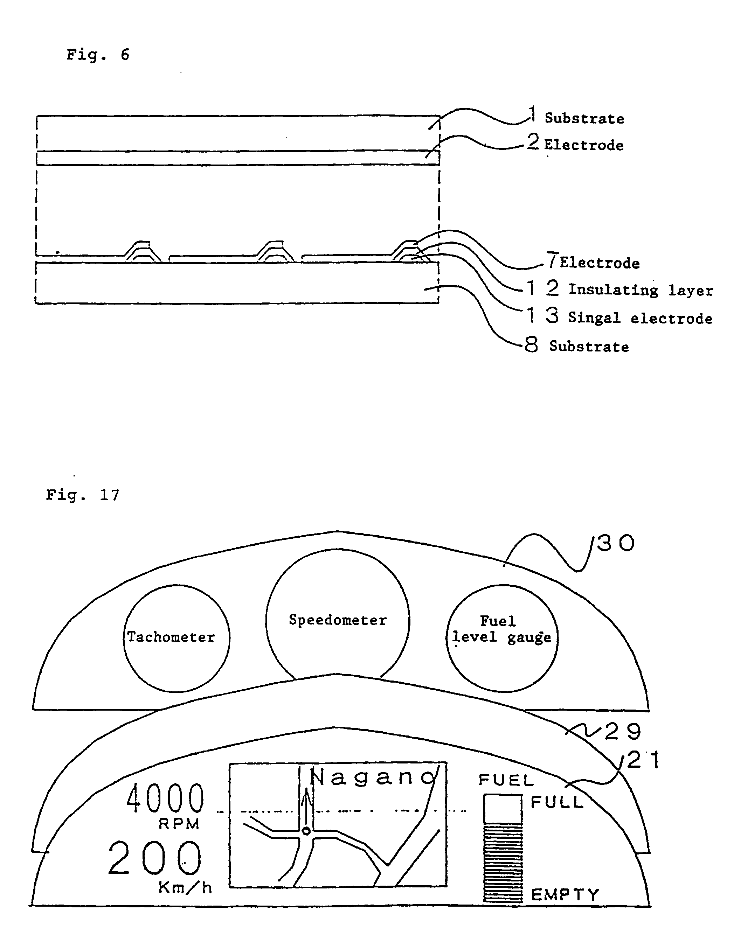

The display apparatus of this embodiment is one combining a display element in which polymer is dispersed as particles or particles-connected aggregations into a liquid crystal containing dichroic dye with an active element, to which a chiral polymer precursor is further applied. Fig. 6 is a simple sectional view of a void panel for the display apparatus of the present invention n which a MIM element is formed. At first, a void panel was fabricated. A transparent electrode 2 was formed on a substrate 1, and then subjected to a alignment treatment. As the alignment treatment, a conventional method utilized for a TN-type liquid crystal display element. In this embodiment, a polyimide film was formed on the electrode and the treated surface was subjected to a rubbing process. Subsequently, on the opposite substrate 8, 480 x 640 pieces of MIM element as active element and a reflection electrode 7 were formed, by which the alignment treatment was applied. A layer for protecting the active element may be applied on the resultant. Thereafter, these substrates were fixed at their peripheries to each other as remaining the sealing inlet with keeping a 5 µm gap therebetween. Next, the liquid crystal/polymer precursor mixture is explained. As the liquid crystal, a mixture of TL213 and MJ91261 (products from Merck Limited) in a mixing ratio of 8:2. With 97 wt% of this mixture, 3 wt% of S811 (a product from Merck Limited) as a chiral component was mixed to give a chiral liquid crystal. With 96.3 wt% of the resulting liquid crystal, M361, SI512 and M34 (products by Mist Toatsu Senryo) as dichroic dyes were further mixed in amounts of 1.5 wt%, 1.7 wt% and 0.5 wt%, respectively. To 93 wt% of thus resulting guest-host type chiral liquid crystal, were dissolved biphenyl methacrylate as a polymer precursor and the following compound as a chiral polymer precursor in amounts of 6.86 wt% and 0.14 wt%, respectively: 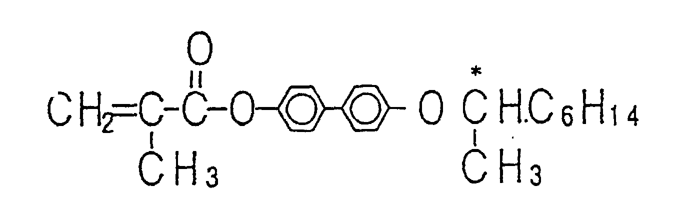 The resultant was put into the void panel fabricated above. This panel was irradiated with UV ray (300 to 400 nm of wave length; 3.5 mW/cm2 in intensity) from the substrate 1 side at 50°C to polymerize the polymer precursor in the liquid crystal; thus a display element was fabricated. This display element was subjected to an anti-reflection treatment on its surface. This treatment is not always necessary.

The reflectance of this display element determined in the absence of an applied electric field was 3% at 20°C. When a driver for driving of liquid crystal and a controller circuit were connected to the display element, the computer screen could be displayed brightly and with good contrast. Off course, the display element can also be used for terminals for a television or a game machine. If a color filter is incorporated to display element, a bright color display can be given.

As the chiral component, liquid crystal and polymer precursor to be used in this embodiment, those described in Examples 1 and 15 can be used.

As for the content of the dichroic dye, in the case where the display element is used mainly for the transmission in the absence of an applied electric field, for example, in the case whereas solar battery is used as a reflective plate or other display apparatus is further placed, the content of the dichroic dye is cut down to improve the electric power production efficiency of the solar battery or to improve the visibility of the display apparatus. For other uses, as described in this embodiment, light absorption in the absence of an applied electric field is fully done so that the effective contrast can be provided.

As the chiral polymer precursor, one used in this embodiment exhibits a chirality of approximately S8111. Other chiral polymer precursors may be used such as the following compounds: 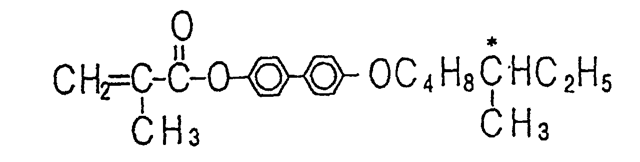 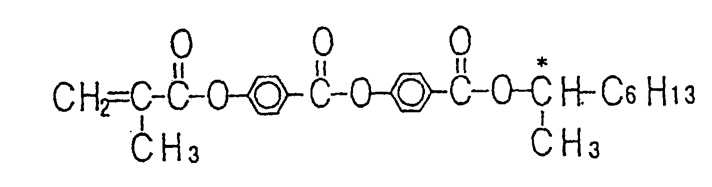 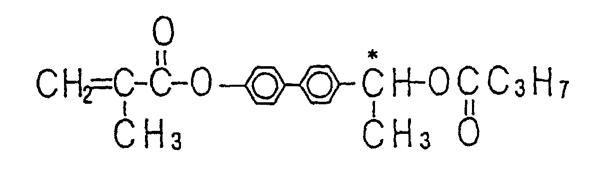 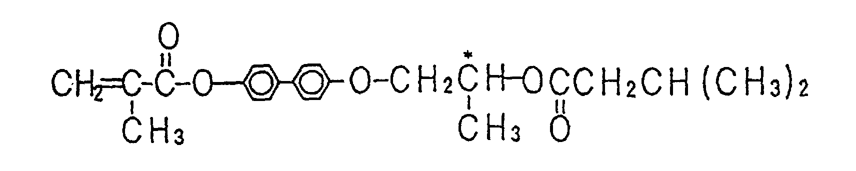 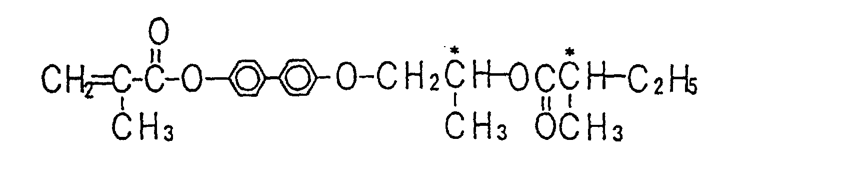 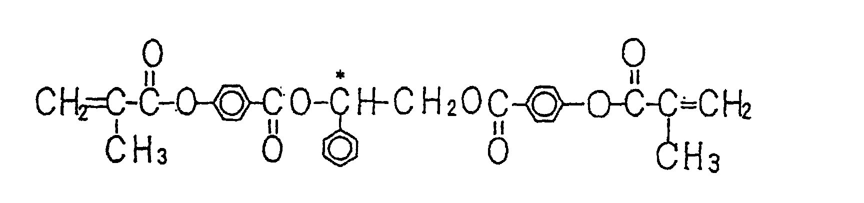 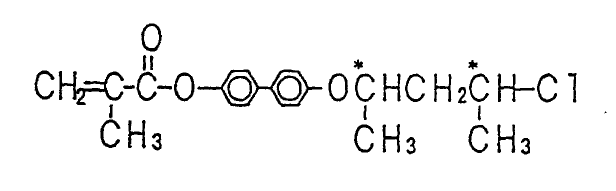 The derivatives of these compounds can also be used, for example, those in which phenyl or biphenyl in the compounds listed above is changed into phenyl, biphenyl or terphenyl skeleton, and those in which the structure of alkyl groups in these compounds are modified, The amount of the chiral polymer precursor to be mixed is determined so that the chiral pitch of the liquid crystal part becomes identical to that of the polymer precursor part. For example, a low molecular weight chiral component S811 shows a chiral pitch of approximately 10 µm when it is mixed with a liquid crystal in an amount of 1 wt% based on the amount of the liquid crystal. On the other hand, the chiral polymer precursor used in this embodiment shows a chiral pitch of approximately 20 µm when it is mixed with a liquid crystal in an amount of 1 wt% based on the amount of the liquid crystal. Accordingly, in order to adjust the both chiral pitches identical, 3 wt% of the low molecular weight chiral component S811 is mixed a liquid crystal to adjust its chiral pitch to approximately 3 µm, and 6 wt% of said chiral polymer precursor is mixed with a polymer precursor to adjust the chiral pitch of the polymer precursor to 3 µm. That is, in the stage before polymerization, the polymer precursor is dissolved in a liquid crystal, and the amount of the liquid crystal is the sum of the amount of the low molecular weight liquid crystal and that of the polymer precursor. Therefore, the amount of chiral component to cause to twist them is the sum of the amounts of the low molecular weight chiral component and the chiral polymer precursor. In the polymerization step by a polymerization means, the polymer precursor and the chiral polymer precursor are polymerized to phase-separate out from the liquid crystal layer and removed. As the result, the chiral component remained in the liquid crystal is only the low molecular weight chiral component. Accordingly, the chiral pitch in the liquid crystal does not change.

On the contrary, in the conventional techniques, compared with this technique, since no chiral polymer precursor is used, a polymer precursor dissolved in a liquid crystal, and the amount of the liquid crystal is the sum of the amounts of a low molecular wight liquid crystal and the polymer precursor. Accordingly, the amount of chiral component to cause to twist them is only that of the low molecular weight chiral component. In the polymerization step by a polymerization means, the polymer precursor is polymerized to phase-separate out from the liquid crystal layer and to be removed. In spite of reducing the amount of the liquid crystal by the amount of the polymerization precursor, the amount of the low molecular weight component remaining therein is not change. As the result, the chiral pitch in the liquid crystal become short and the mismatch between the polymer and the liquid crystal comes to occur.

The thickness of the liquid crystal/polymer layer is preferably 3 to 10 µm. Too thin layer leads a low scattering property, whereas too thick layer not only makes the required driving voltage higher but also leads a decrease in contrast; which are practically disadvantageous.

The active element to be used in this embodiment is not limited to the MIM element indicated in this embodiment, and those which have a transistor structure, such as polysilicone TFT elements and amorphus silicone TFT elements, those which have a MIM structure, ferroelectric elements may be used. The number of the active elements to be used is not also limited to the number indicated in this embodiment, and it may determined according to the intended use. Off course, if without active element, the display element of this embodiment can display as a watch and an electronic memorandum book, as shown in below.

In this embodiment, the reflective electrode 7 may be a transparent electrode, and a reflective layer may be placed on the backside of the display element. The reflective layer may be imparted with a light scattering property. Off course, the reflective layer may be a solar battery.

(Comparative Example 7) The display element of this embodiment employs only S811 as a chiral component in Example 12. Concretely, with the guest-host type chiral liquid crystal of Example 1, 7 wt% of biphenyl methacrylate was mixed as a polymer precursor, to fabricate a display element in the same manner as Example 12.

The reflectance of the thus fabricated display element determined in the absence of an applied electric field was 5% at 20°C.

(Example 13) The display element of the present invention is one in which a polymer is dispersed as particles or particles-connecting aggregations in a liquid crystal with no dichroic dye, to which a chiral polymer precursor is further used. A void panel was fabricated according to Example 5. The mixture of a liquid crystal and a polymer precursor to be put into the void panel and sealed is explained as follows. A chiral liquid crystal was prepared by mixing 98 wt% of RDP80616-2 (a product by Rodic Inc.) as a liquid crystal and 2 wt% of CNL611 (a product by Asahi Denka Kogyo, K.K.) as a chiral component to each other. With resulting chiral liquid crystal, were mixed buthylphenyltolane methacrylate and biphenyl dimethacrylate as polymer precursors and the compound of Example 11 as a chiral polymer precursor in amounts of 3.3 wt%, 1.7 wt% and 0.3 wt%, respectively. This mixture was put into said void panel and sealed. Then, UV ray was irradiated to the resulting panel at 50°C. The display element thus fabricated may be subjected to a non-glare treatment or an anti-reflection treatment on its surface.

On the backside of this display element, was placed a solar battery. The resulting reflection-type display element was determined for its reflectance in the absence of an applied electric field in the same manner as Example 2. As the result, the reflectance at 20°C was 1.8%. This display element could be used for segment display of a watch by applying an electric field. Furthermore, in this display element, the solar battery placed on its backside could be used as a liquid crystal-driving power source.

In this embodiment, no active element was used. However, if used, same effect might be given. In such case, the liquid crystal having a good retentivity should be used, as shown in Example 1. If incorporating with a color filter, a bright color display can be provided. In the case where no active element is used, any material may be employed as a liquid crystal so long as it shows a nematic type liquid crystal phase.

The thickness of the liquid crystal/polymer layer is preferably 3 to 10 µm. Too thin layer leads a low scattering property, whereas too thick layer not only makes the required driving voltage higher but also make decrease in contrast; which are practically disadvantageous.

In stead of the solar battery, a light-absorbing layer and a light-reflective layer may be placed on the backside of the display element. This display element can also display without placing anything on its backside, as white scattering on a transparent glass.

In this embodiment, other materials and fabrication conditions were same as those of Example 12. The chiral components shown in Example 15 may also be used in this embodiment.

(Comparative Example 8) The display element of this embodiment is fabricated according to Example 13, except employing only a low molecular weight chiral component as chiral component. That is, with the chiral liquid crystal of Example 13, butylphenyltolane methacrylate and biphenyl dimethacrylate were mixed as polymer precursors in amounts of 3.4 wt% and 1.6 wt%, respectively. Other materials and fabrication conditions employed were the same as those of Example 13.

The display element thus fabricated was determined for its reflectance in the absence of an applied electric field. As the result, the reflectance was 3% at 20°C.

(Example 14) This embodiment is a display apparatus combining a display element in which a liquid crystal containing dichroic dye is orientationally dispersed in a polymer gel network polymer with active element, to which a chiral polymer precursor is incorporated. A void panel with TFT element was fabricated according to Example 9. The liquid crystal/polymer precursor mixture to be put into the void panel and sealed is explained as follows. A mixture of TL205 and BL007 (products by Merck Limited) in a mixing ratio of 7:3 was used as a liquid crystal. A chiral liquid crystal was prepared by mixing 98 wt% of the liquid crystal mixture with 2 wt% of CNL611 (a product by Asahi Denka Kogyo, K.K.) as a chiral component to each other. With 96.3 wt% of the resulting chiral liquid crystal, were mixed M361, M370 and M483 (products by Mitsui Toatsu Senryo) as dichroic dyes in amounts of 1.2 wt%, 2 wt% and 0.5 wt%, respectively, to give a guest-host type chiral liquid crystal. With 97 wt% of this guest-host type chiral liquid crystal, were mixed 3 wt% of C6H (a product by Philips Corporation) as a polymer precursor and 0.1 wt% of the following compound as a chiral polymer precursor. 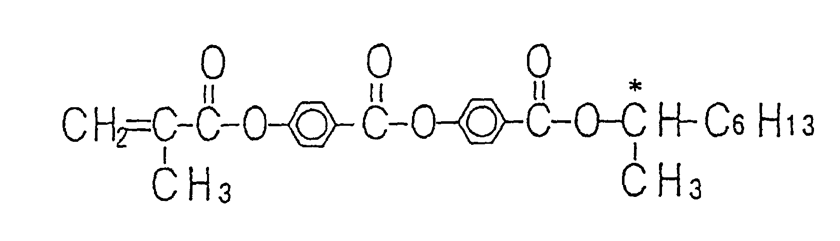 The resulting mixture was put into said void panel and sealed. The UV ray (300 to 400 nm, 3.5 mW/cm2) was irradiated to this panel from the substrate 1 side at 50°C, to polymerize the polymer precursor in the liquid crystal: thus a display apparatus of this embodiment was accomplished. This display apparatus was subjected to a non-glare treatment and an anti-reflection treatment on its surface. These treatments is not always necessary.

This display apparatus was determined for its reflectance in the absence of an applied electric field in the same manner as Example 1. As the result, the reflectance was 3% at 20°C. When a driver for liquid crystal driving and a controller circuit were connected to the display apparatus, the computer screen could be displayed brightly and with good contrast. Off course, the display apparatus can also be used for terminals for a television or a game machine. If a color filter is incorporated to display element, a bright color display can be given.

As the chiral component, liquid crystal, polymer precursor, active element and other fabrication conditions to be employed in this embodiment, those described in Example 12 can be employed. In particular, the chiral component may be those indicated in Example 15.

As for the content of the dichroic dye, in the case where the display element is used for mainly giving a the transmission in the absence of an applied electric field, for example, in the case where a solar battery is used as a reflective plate or other display apparatus is further placed, the content of the dichroic dye is cut down to improve the electric power production efficiency of the solar battery or to improve the visibility of the display apparatus. For other uses, as described in this embodiment, light absorption in the absence of an applied electric field is fully done so that the effective contrast can be provided.

The thickness of the liquid crystal/polymer layer is preferably 3 to 10 µm. Too thin layer leads a low scattering property, whereas too thick layer not only makes the required driving voltage higher but also leads a decrease in contrast; which are practically disadvantageous.

(Comparative Example 9) This embodiment is a display element fabricated according to the process of Example 14, except using only a low molecular weight chiral component as the chiral component. That is, With the guest-host type chiral liquid crystal indicated in Example 14, 3 wt% of C6H was mixed as a polymer precursor. Other materials and fabrication conditions employed were same as those of Example 14.

The display element thus fabricated was determined for its reflectance in the absence of an applied electric field. As the result, the reflectance was 4% at 20°C.

(Example 15) This embodiment is a display element in which a liquid crystal containing no dichroic dye is orientationally dispersed in a polymer gel network polymer with active element, to which a chiral polymer precursor is incorporated. At first, a void panel into which a liquid crystal/polymer precursor mixture was to be put and sealed was fabricated according to Example 5. The liquid crystal/polymer precursor mixture to be put into the void panel and sealed is explained as follows. BL007 (a product by Merck japan Limited) as a liquid crystal was mixed with 10 wt% of CM22 (a product by Chisso Corporation) and 2.5 wt% of CB15 (a product by Merck Japan Limited) as chiral components, to give a chiral liquid crystal. With this chiral liquid crystal, were mixed 3 wt% of C6H of Example 14 as a polymer precursor and 0.1 wt% of the following compound as a chiral polymer precursor. 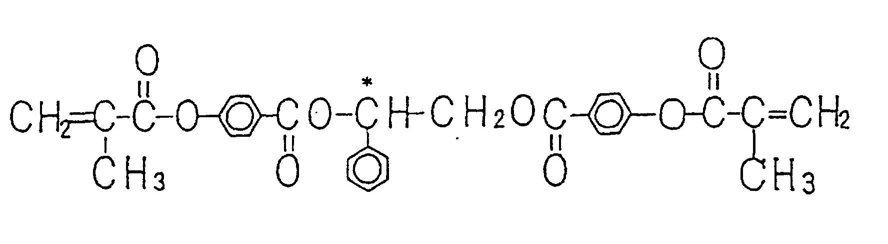 The resulting mixture was put into said void panel and sealed. The UV ray was irradiated to this panel at 50°C: thus a display element of this embodiment was accomplished. This display apparatus may be subjected to a non-glare treatment or an anti-reflection treatment on its surface.

The resulting display apparatus was determined for its reflectance in the absence of an applied electric field in the same manner as Example 1. As the result, the reflectance was 1.5% at 20°C.

The chiral components used in this embodiment have the following characteristics: both of CM22 and CB15 have an ability to cause the axial rotation of a liquid crystal to the right; and CB15 tends to show a longer chiral pitch as increasing in temperature (i.e. showing a positive temperature dependency)m, whereas CM22 tends to show a shorter chiral pitch as increasing in temperature (i.e. showing a negative temperature dependency). Accordingly, like this embodiment, it is preferable to add two or more kinds of chiral components having opposite temperature dependency in chiral pitch to each other. Examples of other chiral components having a negative temperature dependency in chiral pitch include CM22 (a produce by Chisso Corporation), the following compounds: 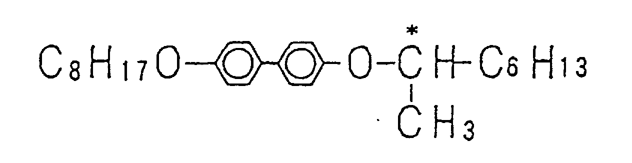 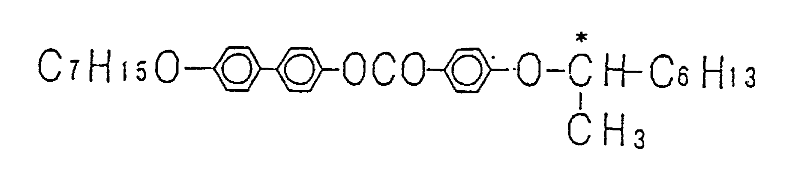 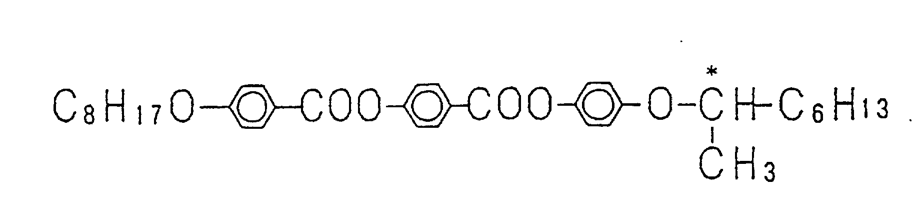 FL519, CNL621, CNL617, CNL616, CNL623, CNL637, CNL638 and CNL639 (products by Asahi Denka kogyo, K.K.). Examples of other chiral components having a positive temperature dependency in chiral pitch include CM19 and CM20 (products by Chisso Corporation), CB15, C15, S811, S1001, R1011, S1082 and R1082 (products by Merck Limited). Other than these chiral components may also be used. In this embodiment, two kinds of chiral components were used. However, three or more kinds of chiral components may be used in a mixture. Off course, the chiral components having an extremely small temperature dependency in chiral pitch may also be used, as shown in Example 1.

The liquid crystal, polymer precursor, a void panel and other materials and fabrication conditions to be employed in this embodiment were according to Example 13. The composition of chiral components indicated in this embodiment can applied to the display elements in which polymer disperses as particles or particles-connecting aggregations.

(Comparative Example 10) This embodiment is a display element fabricated according to the process of Example 15, except using only a low molecular weight chiral component as the chiral component. That is, With the chiral liquid crystal indicated in Example 14, 3 wt% of C6H was mixed as a polymer precursor. Other materials and fabrication conditions employed were same as those of Example 15.

The display element thus fabricated was determined for its reflectance in the absence of an applied electric field. As the result, the reflectance was 3% at 20°C.

(Example 16) This embodiment is a display element in which a liquid crystal containing dichroic dye is orientationally dispersed in a polymer matrix, wherein a chiral polymer precursor and active element are incorporated. A void panel into which a liquid crystal/polymer mixture was to be put was fabricated in the same manner as Example 12. The liquid crystal/polymer precursor mixture to be put into the void panel is explained as follows. A mixture of TL213 and MJ91261 (products by Merck Limited) in a mixing ratio of 8:2 was used as a liquid crystal. A chiral liquid crystal was prepared by mixing 98 wt% of the liquid crystal mixture with 2 wt% of CNL617 (a product by Asahi Denka Kogyo, K.K.) as a chiral component with each other. With 96.4 wt% of the resulting chiral liquid crystal, were mixed M361, SI512 and M34 (products by Mitsui Toatsu Senryo) as dichroic dyes in amounts of 1.5 wt%, 1.7 wt% and 0.4 wt%, respectively, to give a guest-host type chiral liquid crystal. With 77.6 wt% of this guest-host type chiral liquid crystal, were mixed 20 wt% of M6200 (a product by Toagosei Chemical Industry Co., Ltd.) as a polymer precursor, 0.4 wt% of the following compound as a chiral polymer precursor and 2 wt% of Irugacure 184 (a product by Ciba Geigy Limited) as a photo-polymerization initiator. 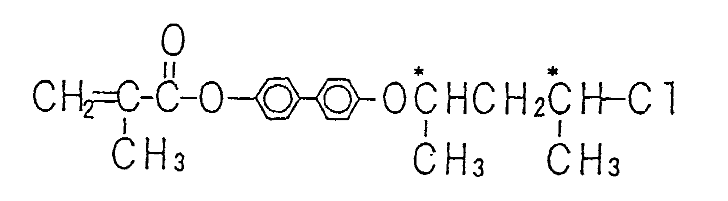 The resulting mixture was put into said void panel and sealed. The UV ray (300 to 400 nm, 3.5 mW/cm2) was irradiated to this panel from the substrate 1 side at 50°C, to polymerize the polymer precursor in the liquid crystal: thus a display apparatus of this embodiment was accomplished. This display apparatus was subjected to a non-glare treatment and an anti-reflection treatment on its surface. These treatments is not always necessary.

This display apparatus was determined for its reflectance in the absence of an applied electric field in the same manner as Example 13. As the result, the reflectance was 8% at 20°C. When a driver for liquid crystal driving and a controller circuit were connected to the display apparatus, the computer screen could be displayed with good contrast. Off course, the display apparatus can also be used for terminals for televisions or game machines. If a color filter is incorporated to display element, a bright color display can be given.

As the chiral component to be used in this embodiment, singular or multiple system as shown in Examples 12 and 15.

As the liquid crystal, polymer precursor, dichroic dye, active element and other materials and fabrication conditions to be employed in this embodiment, those described in Examples 1 and 12 can be employed.

As for the content of the dichroic dye, in the case where the display element is used for mainly giving a the transmission in the absence of an applied electric field, for example, in the case where a solar battery is used as a reflective plate or other display apparatus is further placed, the content of the dichroic dye is cut down to improve the electric power production efficiency of the solar battery or to improve the visibility of the display apparatus. For other uses, as described in this embodiment, light absorption in the absence of an applied electric field is fully done so that the effective contrast can be provided.

The thickness of the liquid crystal/polymer layer is preferably 3 to 10 µm. Too thin layer leads a low scattering property, whereas too thick layer not only makes the required driving voltage higher but also leads a decrease in contrast; which are practically disadvantageous.

(Comparative Example 11) This embodiment is a display element fabricated according to the process of Example 16, except using only a low molecular weight chiral component as the chiral component. That is, with the chiral liquid crystal indicated in Example 16, only a polymer precursor and a photo-polymerization initiator were mixed and no chiral polymer precursor was mixed. Other materials and fabrication conditions employed were same as those of Example 16.

The display element thus fabricated was determined for its reflectance in the absence of an applied electric field. As the result, the reflectance was 10% at 20°C.

(Example 17) This embodiment is a display element in which a liquid crystal containing no dichroic dye is orient ionally dispersed in a polymer matrix, wherein a chiral polymer precursor is incorporated. At first, a void panel into which a liquid crystal/polymer mixture was to be put was fabricated in the same manner as Example 5. The liquid crystal/polymer precursor mixture to be put into the void panel is prepared in the following manner. BL007 (a product by Merck Limited) as a liquid crystal was mixed with 3 wt% of R811 (a product by Merck Limited) as a chiral component with each other, to give a chiral liquid crystal. With this chiral liquid crystal, were mixed 30 wt% of M7100 (a product by Toagosei Chemical Industry Co., Ltd.) as a polymer precursor and 1 wt% of the following compound as a chiral component and DETX (a product by Nippon Kayaku Company, Ltd.) as a photo-polymerization initiator. 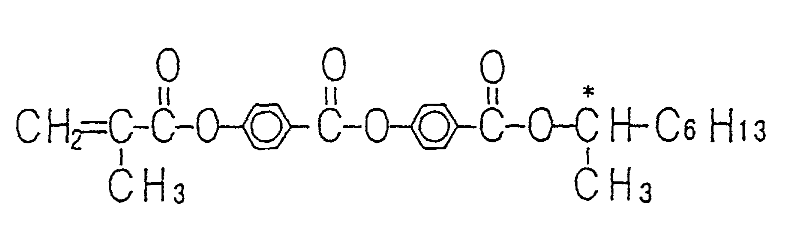 The resulting mixture was put into said void panel and sealed. The UV ray was irradiated to this panel at 50°C: thus a display apparatus of this embodiment was accomplished. This display apparatus may be subjected to a non-glare treatment or an anti-reflection treatment on its surface.

This display apparatus was determined for its reflectance in the absence of an applied electric field in the same manner as Example 1. As the result, the reflectance was 6% at 20°C.

As the chiral component to be used in this embodiment, those indicated in Examples 12 and 15 can be employed.

As the liquid crystal, polymer precursor, a void panel and other materials and fabrication conditions to be employed in this embodiment, those described in Example 12 can be employed.

(Comparative Example 12) This embodiment is a display element fabricated according to the process of Example 17, except using only a low molecular weight chiral component as the chiral component. That is, with the chiral liquid crystal indicated in Example 17, only a polymer precursor and a photo-polymerization initiator were mixed and no chiral polymer precursor was mixed. Other materials and fabrication conditions employed were same as those of Example 17.

The display element thus fabricated was determined for its reflectance in the absence of an applied electric field. As the result, the reflectance was 10% at 20°C.

(Example 18) This embodiment is a display apparatus combining a display element in which a polymer is dispersed in a liquid crystal containing dichroic dye as particles or particles-connecting aggregates with active element, wherein a chiral component having a small temperature dependency in chiral pitch is incorporated. The same void panel as Example 12 was used. The liquid crystal/polymer precursor mixture to be put into the void panel is explained as follows. A mixture of TL205 and MJ91261 (products by Merck Limited) in a mixing ratio of 8:2 was used as a liquid crystal. A chiral liquid crystal was prepared by mixing 98 wt% of this liquid crystal mixture with 2 wt% of the following compound as a chiral component with each other. 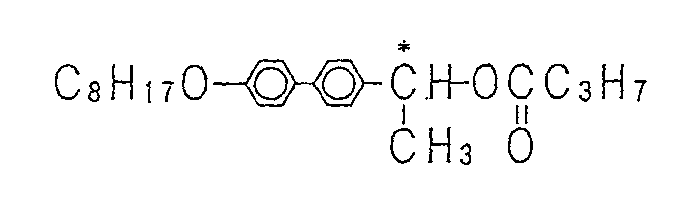 With 96.3 wt% of the resulting chiral liquid crystal, were mixed M361, M370 and M483 (products by Mitsui Toatsu Senryo) as dichroic dyes in amounts of 1.2 wt%, 2 wt% and 0.5 wt%, respectively, to give a guest-host type chiral liquid crystal. To this guest-host type chiral liquid crystal, was dissolved 7 wt% of biphenyl methacrylate as a polymer precursor. The resultant was put into said void panel and sealed. The UV ray (300 to 400 nm, 3.5 mW/cm2) was irradiated to this panel from the substrate 1 side at 50°C, to polymerize the polymer precursor in the liquid crystal: thus a display apparatus of this embodiment was accomplished. This display apparatus was subjected to a non-glare treatment and an anti-reflection treatment on its surface. These treatments is not always necessary.

This display apparatus was determined for its reflectance in the absence of an applied electric field in the same manner as Example 13. As the result, the reflectance was 2% at 50°C and 3% at 20°C. When a driver for liquid crystal driving and a controller circuit were connected to the display apparatus, the computer screen could be displayed brightly with good contrast. Off course, the display apparatus can also be used for terminals for televisions or game machines. If a color filter is incorporated to display element, a bright color display can be given.

As the chiral component to be used in this embodiment, any one may be used so long as it has a small temperature dependency in chiral pitch. In particular, the chiral component exhibiting a changing rate in chiral pitch of 20% or less within use temperature range where the display element is used is more preferable. If the changing rate in chiral pitch is over 20%, the display contrast becomes remarkably decreased due to the temperature change during the display element is used. Examples of the chiral component to be used in this embodiment include the following compounds: 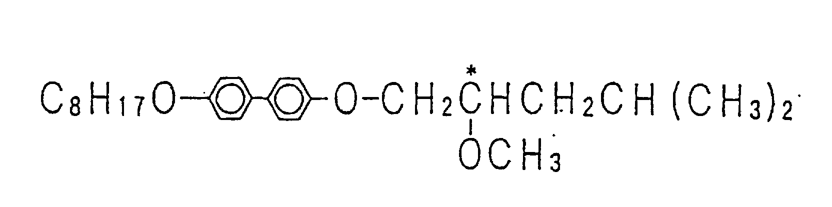 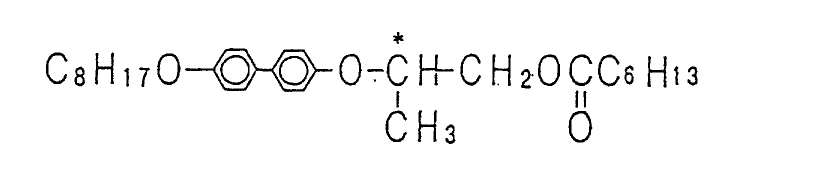 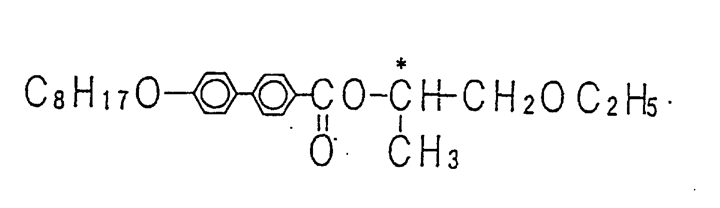 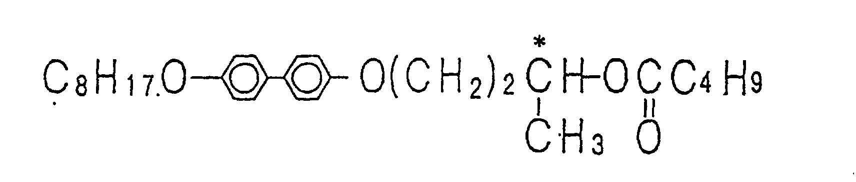 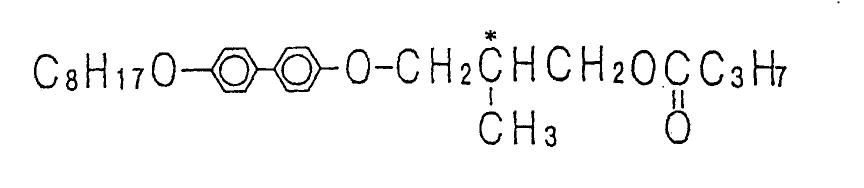 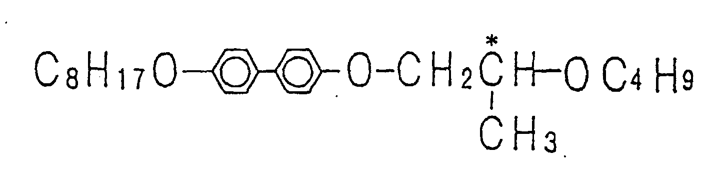 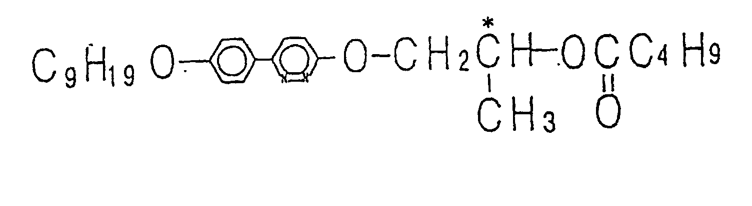 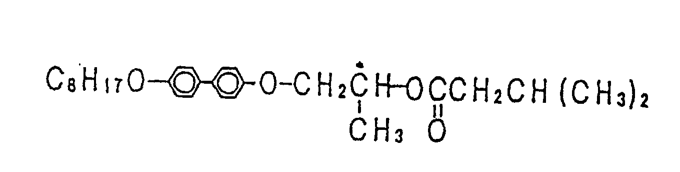 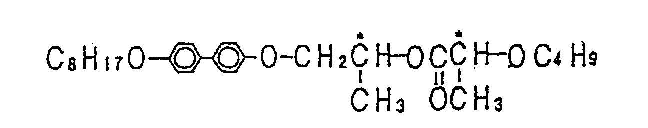 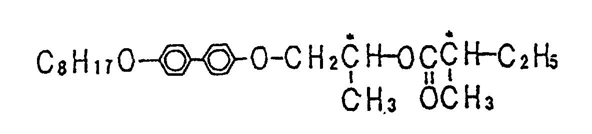 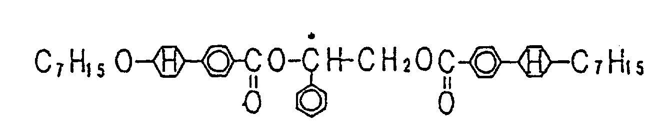 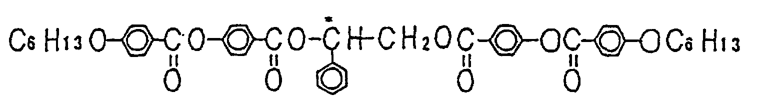 Besides them, CNL611, CNL621, CNL617, CNL616 and CNL623 (products by Asahi Denka Kogyo, K.K.) and so on can also be used. The multiple system of chiral components, as indicated in Example 15, may also be used.

As the liquid crystal and polymer precursor, those indicated in Example 1 can be used.

The thickness of the liquid crystal/polymer layer is preferably 3 to 10 µm. Too thin layer leads a low scattering property, whereas too thick layer not only makes the required driving voltage higher but also leads a decrease in contrast; which are practically disadvantageous.

The active element to be used in this embodiment is not limited to the MIM element indicated in this embodiment, and those which have a transistor structure, such as polysilicone TFT elements and amorphous silicone TFT elements, those which have a MIM structure, ferroelectric elements may be used. The number of the active elements to be used is not also limited to the number indicated in this embodiment, and it may determined according to the intended use. Off course, if without active element, the display element of this embodiment can be operated by a simple matrix type drive or a static drive.

In this embodiment, the reflective electrode 7 may be a transparent electrode, and a reflective layer or a solar battery may be placed on the backside of the display element. The reflective layer may be imparted with a light scattering property.

(Comparative Example 13) This embodiment is a display apparatus fabricated according to the process of Example 18, except using only a chiral compound having a positive temperature dependency in chiral pitch as the chiral component. That is, 2.5 wt% of CB15 (a product by Merck Limited) as a chiral component was mixed with the liquid crystal. Other materials and fabrication conditions employed were same as those of Example 18.

The display element thus fabricated was determined for its reflectance in the absence of an applied electric field. As the result, the reflectance was 2% at 50°C and 5% at 20°C.

(Example 19) This embodiment is a display element which contains no dichroic dye and wherein a liquid crystal and a polymer are orientationally dispersed to each other, wherein chiral component having a small temperature dependency in chiral pitch is used. A void panel with no active element was fabricated in the same manner as Example 5. The liquid crystal/polymer precursor mixture to be put into the void panel is explained as follows. A mixture of RDP80616-2 (a produce by Rodic Inc.) and ML1009 (a product by Merck Limited) in a mixing ratio of 7:3 was used as a liquid crystal. A chiral liquid crystal was prepared by mixing this liquid crystal mixture with 2 wt% of CNL617 (a product by Asahi Denka Kogyo, K.K.) as a chiral component with each other. The resulting chiral liquid crystal was mixed with 4 wt% of methyl terphenyl methacrylate as a polymer precursor. The resultant was put into said void panel and sealed. The UV ray was irradiated to this panel at 50°C. Thus, a display apparatus of this embodiment was accomplished. This display apparatus may be subjected to a non-glare treatment or an anti-reflection treatment on its surface.

This display apparatus was placed with a solar battery on its backside to give a reflection-type of display element. The resultant was determined for its reflectance in absence of an applied electric field in the same manner as Example 18. As the result, the reflectance was 1% at 50°C and 3% at 20°C. When an electric field was applied, the display element could be used for a segment display for a watch.

In this embodiment, no active element was used. However, if used, same effect might be given. In such case, the liquid crystal having a good retentivity should be used, as shown in Example 1. It is preferable to use, for example, TL202, TL204, TL205, TL213, TL215, TL216 and so on as a base. If incorporating with a color filter, a bright color display can be provided. In the case where no active element is used, any material may be employed as a liquid crystal so long as it shows a nematic type liquid crystal phase.

The thickness of the liquid crystal/polymer layer is preferably 3 to 10 µm. Too thin layer leads a low scattering property, whereas too thick layer not only makes the required driving voltage higher but also make decrease in contrast; which are practically disadvantageous.

In stead of the solar battery, a light-absorbing layer and a light-reflective layer may be placed on the backside of the display element. If without placing anything on the backside, this display element can also display as white scattering on a transparent glass.

In this embodiment, other materials and fabrication conditions were same as those of Example 18. The chiral components shown in Example 15 may also be used in this embodiment.

(Comparative Example 14) This embodiment is a display apparatus fabricated according to the process of Example 19, except using only a chiral compound having a positive temperature dependency in chiral pitch as the chiral component. That is, 5 wt% of CB15 (a product by Merck Limited) was mixed with the liquid crystal. Other materials and fabrication conditions employed were same as those of Example 19.

The display element thus fabricated was determined for its reflectance in the absence of an applied electric field. As the result, the reflectance was 1% at 50°C and 3% at 20°C.

(Example 20) This embodiment is a display apparatus combining a display element in which a liquid crystal containing dichroic dye is orientationally dispersed in a polymer gel network with active element, wherein a chiral component having a small temperature dependency in chiral pitch is incorporated. A void panel with formation of TFT element was fabricated in the same manner as Example 2. The liquid crystal/polymer precursor mixture to be put into the void panel is explained as follows. A mixture of TL205 and BL007 (products by Merck Limited) in a mixing ratio of 7:3 was used as a liquid crystal. A chiral liquid crystal was prepared by mixing 98 wt% of this liquid crystal mixture with 2 wt% of CNL611 (a product by Asahi Denka Kogyo, K.K.) as a chiral component with each other. With 96.3 wt% of the resulting chiral liquid crystal, were mixed M361, M370 and M483 (products by Mitsui Toatsu Senryo) as dichroic dyes in amounts of 1.2 wt%, 2 wt% and 0.5 wt%, respectively, to give a guest-host type chiral liquid crystal. With 97 wt% of this guest-host type chiral liquid crystal, was mixed 3 wt% of C6H (a product by Philips Corporation) as a polymer precursor. The resultant was put into said void panel and sealed. The UV ray (300 to 400 nm, 3.5 mW/cm2) was irradiated to this panel from the substrate 1 side at 50°C, to polymerize the polymer precursor in the liquid crystal: thus a display of this embodiment was accomplished. This display apparatus was subjected to a non-glare treatment and an anti-reflection treatment on its surface. These treatments is no always necessary.

This display apparatus was determined for its reflectance in the absence of an applied electric field. As the result, the reflectance was 2% at 50°C and 3% at 20°C. When a driver for liquid crystal driving and a controller circuit were connected to the display apparatus, the computer screen could be displayed brightly with good contrast. Off course, the display apparatus can also be used for terminals for televisions or game machines. If a color filter is incorporated to display element, a bright color display can be given.

As the chiral component, liquid crystal, polymer precursor, active element and the fabrication conditions, those indicated in Example 2 can be employed. In particular, as for the chiral component, the multiple system indicated in Example 15 may also be used.

The thickness of the liquid crystal/polymer layer is preferably 3 to 10 µm. Too thin layer leads a low scattering property, whereas too thick layer not only makes the required driving voltage higher but also leads a decrease in contrast; which are practically disadvantageous.

(Comparative Example 15) This embodiment is a display apparatus fabricated according to the process of Example 20, except using only a chiral compound having a positive temperature dependency in chiral pitch as the chiral component. That is, 2 wt% of CB15 (a product by Merck Limited) as a chiral component was mixed with the liquid crystal. Other materials and fabrication conditions employed were same as those of Example 20.

The display element thus fabricated was determined for its reflectance in the absence of an applied electric field. As the result, the reflectance was 3% at 50°C and 10% at 20°C.

(Example 21) This embodiment is a display element in which a liquid crystal containing no dichroic dye is orientationally dispersed in a polymer gel network, wherein a chiral component having a small temperature dependency in chiral pitch is incorporated. A void panel into which a liquid crystal/polymer precursor mixture was to be put was fabricated in the same manner as Example 5. The liquid crystal/polymer precursor mixture to be put into the void panel is explained as follows. BL007 (a product by Merck Limited) as a liquid crystal was mixed with 10 wt% of CM22 (a product by Chisso Corporation) and 2.5 wt% of CB15 (a product by Merck Limited) as chiral components, to give a chiral liquid crystal. The resulting chiral liquid crystal was mixed with 3 wt% of C6H used in Example 3 as a polymer precursor. The resultant was put into said void panel and sealed. The UV ray was irradiated to this panel at 50°C. The display element thus fabricated may be subjected to a non-glare treatment or an anti-reflection treatment on its surface.

On the backside of this display element, a solar battery was placed, to give a reflection type of display element. The resulting display element was determined for its reflectance in the absence of an applied electric field in the same manner as Example 1. As the result, the reflectance was 2% at 50°C and 5% at 20°C.

As the chiral component to be used in this embodiment, those which were indicated in Example 15 can be employed.

As the liquid crystal, polymer precursor, a void panel and other fabrication conditions, those indicated in Example 19 can be employed.

(Comparative Example 16) This embodiment is a display apparatus fabricated according to the process of Example 21, except using only a chiral compound having a positive temperature dependency in chiral pitch as the chiral component. That is, 5 wt% of CB15 (a product by Merck Limited) as a chiral component was mixed with the liquid crystal. Other materials and fabrication conditions employed were same as those of Example 21.

The display element thus fabricated was determined for its reflectance in the absence of an applied electric field. As the result, the reflectance was 1% at 50°C and 3% at 20°C.

(Example 22) This embodiment is color display apparatus with a color filter, wherein the embodiments described above are applied. Fig. 7 is a simple, partial sectional view of a void panel used in this embodiment, in which a color filter is formed. The materials other than a color filter and fabrication conditions were same as those of each embodiment. , In this embodiment, dichroic dye was not added. However, for the purpose of improving display contrast, dichroic dye may be added to the color display apparatus. When a liquid crystal driver for color display was connected to this color display apparatus to be used as a computer terminal, color display was provided with good contrast. Off course, the display apparatus can also be used the display of watches, televisions or game machines.

As the construction or composition and the fabrication conditions of the chiral component, liquid crystal/polymer layer, void panel to be used in this embodiment, those indicated in Examples 1 to 21. The color display element of this embodiment can also be applied to the electronic apparatus as describe below.

As for the color filter to be used, one having a lighter tone than the conventional transmission-type color filters can give a brighter display. The colors to be displayed in this color display apparatus can be freely select from the colors which can be displayed in a color display, such as three primary colors (i.e. red, blue and green) and yellow, cyan, magenta and so on.

As for the position where a color filter is to be formed, in this embodiment, a color filter was formed on the liquid crystal-contacting side of the substrate 1 positioning in the display side of the display apparatus. However, the color filter may also be formed on the substrate 8. From viewpoint of the required driving voltage, it is preferable to form the color filter between a substrate and an electrode. A transparent electrode may be formed on the color filter.

In the case where the color filter is formed on the substrate 1, the color filter should be made of a material which can transmit UV ray used for the polymer precursor polymerization.

The active element is not limited to the TFT element indicated in this embodiment, and other TFT elements having other structures, transistors, MIM elements, ferroelectric elements and the like may be used. As the substrate to be formed with such active element thereon, can be employed, for example, semi-conductors such as glass, silicone, arsenic gallium and germanium, other inorganic substances and organic substances such as plastics. In the display element according to the present invention, all of a driving driver and a controller can be built or set into the substrates. Therefore, by using the display element, a display apparatus can be fabricated in extremely low cost.

(Example 23) This embodiment is electronic memorandum book, which is one kind of information processing apparatuses, incorporated with the display elements any of the above-described Examples and Comparative Examples as the display. Fig. 8 is a simple sectional view of the information processing apparatus according to this embodiment. A display element was fabricated according any of above-described Examples or Comparative Examples, and then placed with a solar battery on its backside. When the electric power of the solar battery was connected to the power source of the electronic memorandum book, its visibility became improved, and furthermore the amount of time the electronic memorandum book could be used became remarkably increased.

In the electronic apparatus of this embodiment, the solar battery may be connected to a storage battery built in the apparatus to store the electric power produced by the solar battery in the storage battery, by which the electronic apparatus can be operated effectively even in the dark circumstances.

In the conventional electronic memorandum book, since a solar battery occupies a large space, the design and size have been limited. In the electronic memorandum book according to this embodiment, on the contrary, since a display element used is almost transparent, a display panel can be superposed on a solar battery, resulting in realization of an extremely compact electronic memorandum book with no trouble in running down of battery.

This display apparatus may be placed with an information input device such as a tablet or a touch-type panel on its surface of backside.

(Example 24) This embodiment is a watch, which is one kind of information display apparatuses, incorporated with the display element of. any of the above-described Examples and Comparative Examples. In particular, this embodiment is watch in which the display element is used as a clockface. Fig. 9 is a simple sectional view of the information display apparatus according to this embodiment. A display element with a hole in the center was fabricated according one of above-described Examples or Comparative Examples. A solar battery was placed on the backside of the display element, and then pointers were set through the axis of an analogue-type watch, whereby a hybrid-type watch was accomplished. The resulting watch can show a good display property with an extremely high visibility.

In the display apparatus of this embodiment, the solar battery may be connected to a storage battery built in the apparatus to store the electric power produced by the solar battery in the storage battery, by which the apparatus can be operated effectively even in the dark circumstances.

This display apparatus could not be driven effectively with the voltage supplied from the solar battery. However, when a booster circuit was incorporated into the apparatus and the voltage of the solar battery was boosted to 5V, the display apparatus showed an extremely bright display.

As one of the driving methods for this display apparatus, the ground of the liquid crystal driver may be shaken in times to the driving timing. This method can make the voltage applied to the display apparatus substantially double the source voltage. As the result, by this method, the display elements described in the above embodiments can be driven effectively and an extremely bright display can be provided.

The display elements of Examples described above are fairly low electric power consumption type. In order to further elongate the battery life of the watch, the watch may be designed so that the display of the display element is provided only in the switch-ON state.

In this embodiment, in stead of the solar battery, a light-absorbing plate may be used, by which the same level of display can be provided. In this case, the driving power source is only a built-in battery.

(Example 25) This embodiment is watch, which is one kind of information display apparatuses, incorporated with the display elements of above-described Examples and Comparative Examples. In particular, in this embodiment, the display element is used as a cover glass of watch (see Fig. 10). A display element was fabricated according one of above-described Examples or Comparative Examples. A solar battery was used as a clockface, and pointers were set through the axis of an analogue-type watch, whereby a hybrid-type watch was accomplished. The resulting watch can show a good display property with an extremely high visibility.

In this embodiment, the constructions other than described above was same as those of Example 24.

(Example 26) This embodiment is a portable television as an information display apparatus, to which one of the display elements of above-described Examples and Comparative Examples are applied (see Fig. 11). A display element was fabricated according to one of above-described Examples or Comparative Examples, and then placed with a solar battery on its backside. When the resultant was incorporated into a potable television body, a good display with an extremely high visibility could be provided, and furthermore the amount of time the television could be used became remarkably increased.

In this embodiment, the constructions other than described above was same as those of Example 24.

In the conventional portable information display apparatus (i.e. television), since a solar battery occupies a large space, the design and size have been limited. In the information display apparatus according to this embodiment, on the contrary, since a display element used is almost transparent, a display panel can be superposed on a solar battery, resulting in realization of an extremely compact electronic information display apparatus with no trouble in running down of battery.

(Example 27) This embodiment is a display apparatus in which the display elements of above-described Examples and Comparative Examples are superposed on an arbitral display apparatus or a solar battery and a highly refractive layer is placed therebetween. The electronic apparatus of this embodiment is simply illustrated in Fig. 12. The display element to be placed on a watch was fabricated according one of above-described Examples or Comparative Examples. This display element could be fully driven with a conventional IC designed for watch. This display element was superposed on a dark clockface. In this time, on the surface of the flat dark clockface, ITO (refractive index: 1.8) was vapor-evaporated as a highly refractive layer. When date, time and Clock resistor function were made to display on the two-layer type of display apparatus thus fabricated, a digital display could be provided with large letters on the clockface of the conventional analogue-type watch; which was highly functional and fashionable. The brightness of this display apparatus became brighter by 1.5 times that of the apparatus without highly refractive layer.

In this embodiment, the constructions other than described above was same as those of Example 24.

The display apparatus of this embodiment can be used as a display part of a meter for machine, a domestic electric product and an electronic apparatus, as well as a wrist watch and a table clock. This display apparatus may be any type such as analogue mode, digital mode or hybrid mode. However, the clockface is preferably dark tone or reflective type, so that the display of the resultant becomes clear. When a solar battery is used as a clockface and the electric power produced by the solar battery is used as the driving power source of the apparatus, the life of the battery can be remarkably elongated.

This display apparatus can also be applied to a meter panel of automobile.

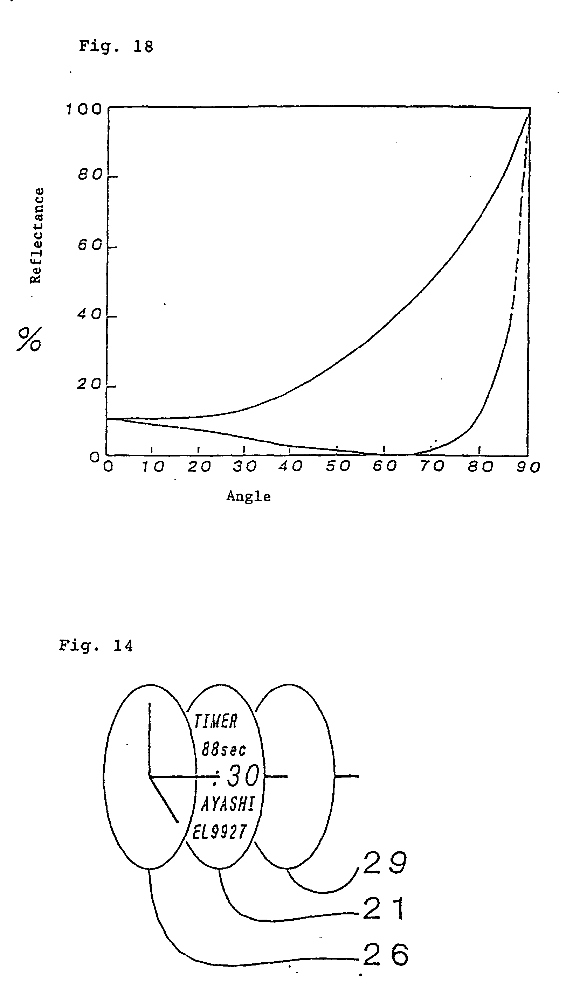

As the material of the highly refractive layer to be employed, besides ITO, any one may be used so long as it has a high refractive index. Examples of such material include glasses having high refractive index (e.g. FDS1, a product by HOYA Corporation. refractive index: 2), inorganic oxides, thin metal films, films of organic substances and polymers (preferably films of those containing many aromatic rings such as terphenyl, perylene and tetracene), and so on. As the position where the highly refractive layer, those shown in Figs. 13 and 14 are also effective.

This embodiment can be applied to on-vehicle meter panels, other mechanized meters, displays of domestic electric products and electronic apparatuses, and so on. The use of this display apparatus enables to display both of an analogue display and a digital display in one display window. Particularly, the massiveness of analogue display is not impaired, and therefore this display apparatus is suitable for the use where high quality is required. Off course, if applied to a digital display apparatus (such as twisted nematic type liquid crystal element, LED, VFD, plasma display and so on), this display apparatus can provide the same effect.

### (Example 28)

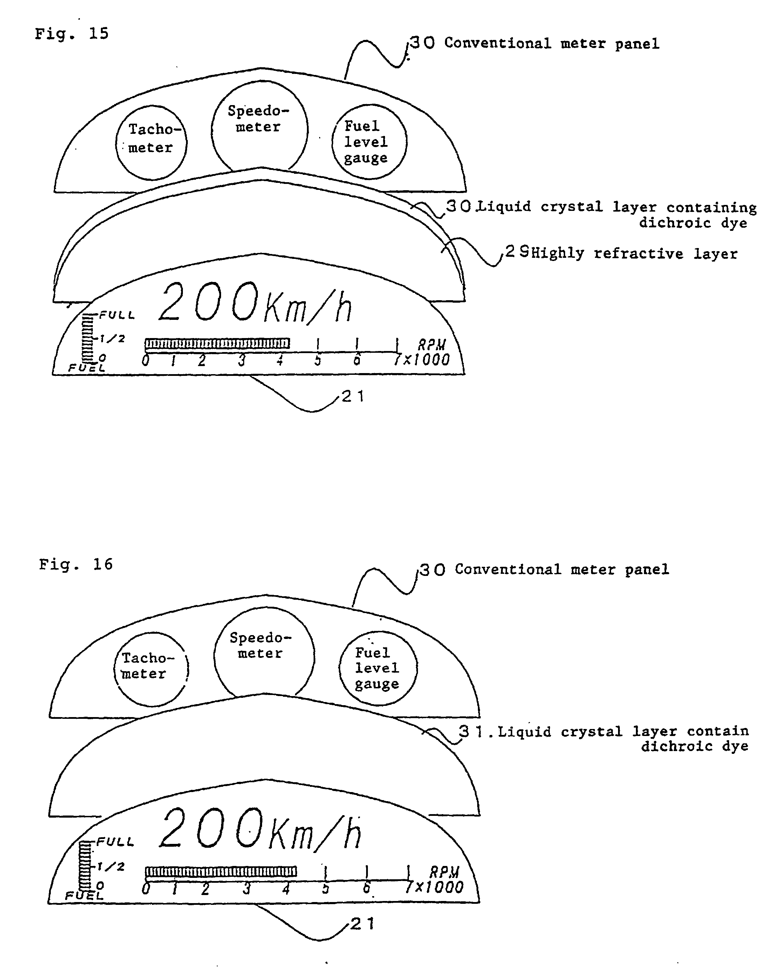

This embodiment is a display apparatus using the display apparatus and a display element of Example 23, in which a liquid crystal layer containing dichroic dye is placed between the display apparatus of lower side and the display element of upper side (see Fig. 15). The layer containing dichroic dye is explained as follows. A pair of transparent substrates with electrodes were subjected to an alignment treatment. Then they were fixed at their peripheries with keeping a 7 µm gap (which being suitably adjusted according to the intended use) therebetween. Into this gap, a liquid crystal (a mixture of ZLI1840 (a product by Merck Limited), S344 (a product by Mitsui Toatsu Senryo) and CB15 (a product by Merck Limited) in a mixing ratio of 95:3:2; the materials and mixing ratio to be employed optimized according to the intended use) was put. The panel thus fabricated was placed as shown in Fig. 15.

If the display of the display element of the frontside is intended to clear, the electric field is controlled to render the liquid crystal layer containing dichroic dye to a light-absorbing state, so that the display stands out by the light scattering. In this case, in stead of the reverse PDLC, a conventional PDLC may be used. On the other hand, if the display of the display apparatus of the backside, the electric field is controlled in the opposite way to the electric field control described above to make the layer containing dichroic dye transparent.

The liquid crystal layer containing dichroic dye is not limited to the liquid crystal having a positive dielectric anisotropy indicated in this embodiment. and liquid crystals having a negative dielectric anisotropy may also be used. In such case, it is preferable to apply a homeotropic treatment to the surface of the substrates sandwitching the liquid crystal, by which, contrary to the case described above, the liquid crystal layer becomes transparent in the absence of an applied electric field and absorbs light in the presence of an applied field.

In Fig. 15, a highly refractive layer was placed, However, if without the layer, as shown in Fig. 16, the display can be provided.

This embodiment can be applied to the on-vehicle type of meter panels, other mechanized meters, displays of domestic electric products and electronic apparatuses, and so on. The use of this display apparatus enables to both types of displays of analogue mode and digital mode in one display window. Particularly, the massiveness of analogue display is not impaired, and therefore this display apparatus is suitable for the use where high quality is required. If a panel according to Example 2 or Comparative Example 2, in which a transparent electrode is used instead of the reflective electrode, is superposed on an analogue meter, as shown in Fig. 17 as an application example, the resulting display apparatus can be used as a display for the on-vehicle type of car navigation system, television or video projector. In such case, a car driver can see the display during driving with his face to the car-running direction, and therefore can drive extremely safely.

If applied to a digital-mode display apparatus (e.g. twisted nematic type liquid crystal element, LED, VFD, plasma display, etc.), the display apparatus of this embodiment can give the same effect.

### Industrial Applicability

As described above, according to the present invention, when a PDLC or a reverse PDLC is applied to the use where a haze is likely to stand out, an adequate amount of dichroic dye is added to a liquid crystal and the material having a slow fluorescence quantum yield, which can correct between the twist of the liquid crystal layer before polymerization and that after polymerization or which has a small temperature dependency is used; by which a haze can be reduced and the visibility can also be improved. The haze reduction technique of the present invention is extremely effective for the use where fashionability is made into great account, such as watch. For example, in a wrist watch, when the reverse PDLC is placed as a clockface or a cover glass, the haze on the PDLC panel becomes almost inconspicuous and a high contrast can be provided. On the other hand, by superposing the reverse PDLC on a conventional display apparatus or a solar battery directly or through a highly refractive layer, a bright, multifunctional electronic apparatus with a high visibility can be fabricated.

The use of the display element or apparatus of the present invention enables to fabricate wrist watches, table clocks, domestic electric products and electronic apparatuses with an extremely large capacity and extremely high visibility.

Furthermore, in the case where a solar battery is built in the display element and apparatus, the resulting display element and apparatus are compact and show a high visibility and low electric power consumption. For example, due to this technique, the reverse PDLC comes to be used as a cover glass or a clockface of an analogue-mode watch incorporated with a solar battery. Accordingly, a watch imparted with both the beauty of an analogue-mode watch and the multifunctionality of a digital-mode watch can be provided.

On the other hand, when used as a display part of an electronic memorandum book or a potable television, even if a solar battery is built in or not, an extremely compact electronic memorandum book or a potable television with high visibility can be provided. Particularly those incorporated with a solar battery can be used with no trouble in running down of battery.

The display element and apparatus of the present invention can also be used as an on-vehicle type of meter panel with a good visibility. For example, a conventional analogue-mode display apparatus is used as a panel to be placed on the backside, a reverse PDLC is placed on the surface of the display apparatus, and then the back display is lighted up by the back light and the front display element is lighted up from the front side (which may not be necessary in day time); as the result, the front display is stood out on the display of the backside. Thus, a display with an excellent visibility can be provided. As thus described, since the display element of the present invention can be placed on a conventional mechanized meter, the application range of the present invention is very wide. The electronic apparatus of the present invention is essentially reflective type, and can be seen better as the circumstances become brighter. Therefore, they does not have the defects which the electronic apparatuses of self-emission type and back light type would have. In addition, in the case where a display element using a conventional back light type or reflective type of twisted nematic liquid crystal is placed on the backside of the display element of the present invention, same level of effect can be given.

## Claims

1. An electronic apparatus comprising:
a display apparatus for displaying first information; and
a display element for displaying second information, wherein said display element is adapted to become transparent in the absence of an applied electric field and to exhibit a light scattering state in the presence of a predetermined electric field applied across the element, and wherein said display element is superposed on said display apparatus.

2. An electronic apparatus according to Claim 1, wherein said display element is prepared by placing a mixed solution of polymer or polymer precursor with liquid crystal between a pair of electrodes in a liquid crystalline state and then causing phase-separation of the polymer from the liquid crystal by a phase-separation means.

3. An electronic apparatus according to Claim 1 or Claim 2, wherein a reflection-reinforcing layer is placed on the backside of said display element.

4. An electronic apparatus according to Claim 3, wherein said reflection-reinforcing layer is made of a transparent material.

5. An electronic apparatus according to Claim 1, wherein a liquid crystal element equipped with an electric field application means and containing dichroic dye is placed between said display element and said display apparatus.

6. An electronic apparatus according to any one of the preceding claims, wherein a non-glare treatment and/or an anti-reflection treatment is applied to said display element on a surface of a side adapted to be viewed by an observer for viewing said second information.

7. An electronic apparatus according to Claim 2, wherein said display element comprises first and second substrates respectively disposed on either side of said phase-separated polymer and liquid crystal and wherein a colour filter is formed on a liquid crystal-contacting side of at least either of said substrates.

8. An electronic apparatus according to Claim 2, wherein said display element comprises first and second substrates respectively disposed on either side of said phase-separated polymer and liquid crystal and wherein an active element is formed on a liquid crystal-contacting side of at least either of said substrates.

9. An electronic apparatus according to Claim 2, wherein the liquid crystal used in said display element contains the following compound: 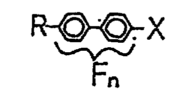 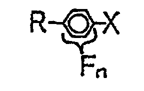 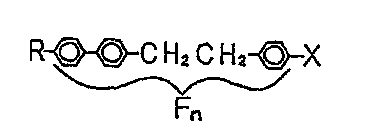 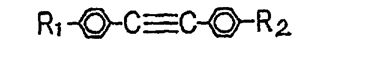 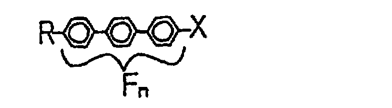 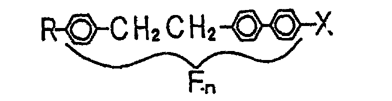 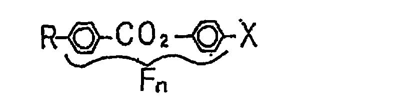 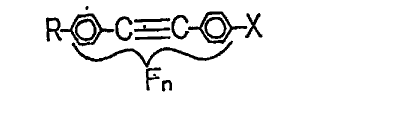 wherein n is an integer; R represents an alkyl, alkoxy, cycloalkyl or cycloalkoxy group; R1 and R2 independently represent an alkyl, cycloalkyl, alkoxy or cycloalkoxy group, or H or F; X represents H, F, Cl or CN.

10. An electronic apparatus according to Claim 2, wherein the polymer used in said display element is prepared by polymerisation of the following polymer precursor as at least one component: 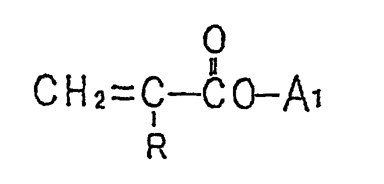 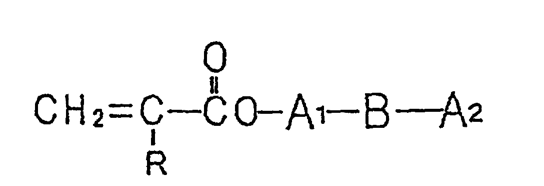 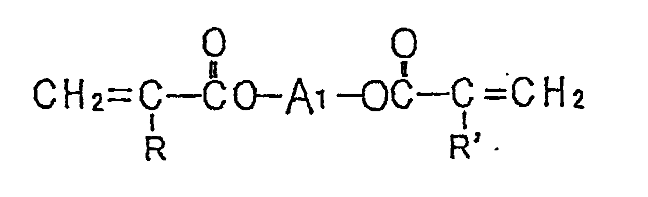 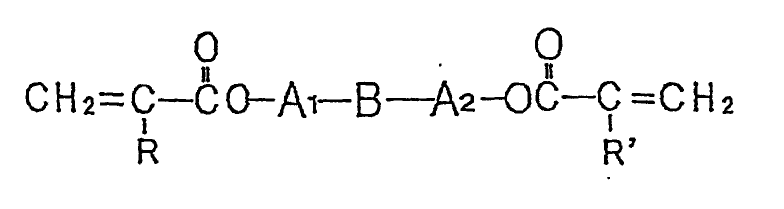 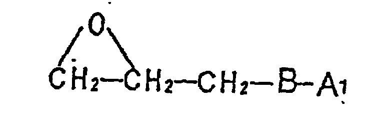 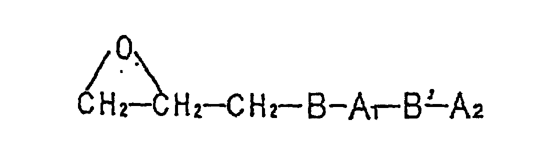 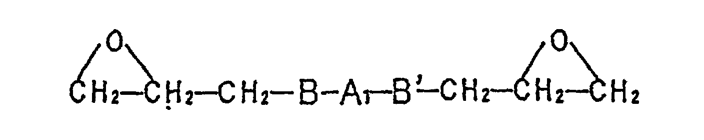 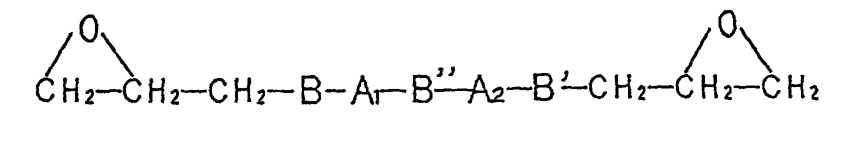 wherein R and R' independently represent h or CH3; B, B' and B" independently represent OCO, COO, OCONH, NHCOO, CONH, NHCO,
-C≡C-, an alkyl group, O, N or S; A1 and A2 independently represent a group containing aromatic ring, such as phenyl, biphenyl, terphenyl, quaterphenyl, naphthalene and anthracene, and may be substituted by halogens, alkyl group and cyano group.

11. An electronic apparatus as claimed in any one of the preceding claims, wherein the display element forms the cover glass of the display device.

## Patentansprüche

1. Elektronische Vorrichtung, die umfaßt:
eine Anzeigevorrichtung zum Anzeigen erster Informationen; und
ein Anzeigeelement zum Anzeigen zweiter Informationen, wobei das Anzeigeelement dafür ausgelegt ist, bei Abwesenheit eines angelegten elektrischen Feldes transparent zu werden und bei Anwesenheit eines vorgegebenen elektrischen Feldes, das über dem Element anliegt, einen Lichtstreuungszustand aufzuweisen, und wobei das Anzeigeelement der Anzeigevorrichtung überlagert ist.

2. Elektronische Vorrichtung nach Anspruch 1, bei der das Anzeigeelement vorbereitet wird durch Plazieren einer gemischten Lösung aus einem Polymer oder einem Polymervorläufer und einem Flüssigkristall zwischen einem Elektrodenpaar in einem flüssigen kristallinen Zustand und anschließendes Bewirken der Phasentrennung des Polymers vom Flüssigkristall durch ein Phasentrennungsmittel.

3. Elektronische Vorrichtung nach Anspruch 1 oder Anspruch 2, bei der eine Reflexionsverstärkungsschicht auf der Rückseite des Anzeigeelements plaziert ist.

4. Elektronische Vorrichtung nach Anspruch 3, bei der die Reflexionsverstärkungsschicht aus einem transparenten Material gefertigt ist.

5. Elektronische Vorrichtung nach Anspruch 1, bei der ein Flüssigkristallelement, das mit einem Elektrofeld-Beaufschlagungsmittel ausgestattet ist und einen dichroitischen Farbstoff enthält, zwischen dem Anzeigeelement und der Anzeigevorrichtung plaziert ist.

6. Elektronische Vorrichtung nach irgendeinem der vorangehenden Ansprüche, bei der Antiglanzbehandlung und/oder eine Antireflexionsbehandlung auf das Anzeigeelement auf einer Oberfläche einer Seite angewendet wird, die dafür ausgelegt ist, von einem Betrachter betrachtet zu werden, um die zweiten Informationen zu betrachten.

7. Elektronische Vorrichtung nach Anspruch 2, bei der das Anzeigeelement erste und zweite Substrate umfaßt, die jeweils auf einer der Seiten des phasengetrennten Polymers und Flüssigkristalls angeordnet sind, wobei ein Farbfilter auf einer Flüssigkristallkontaktseite wenigstens eines der Substrate ausgebildet ist.

8. Elektronische Vorrichtung nach Anspruch 2, bei der das Anzeigeelement erste und zweite Substrate umfaßt, die jeweils auf einer der Seiten des phasengetrennten Polymers und Flüssigkristalls angeordnet sind, wobei ein aktives Element auf einer Flüssigkristalikontaktseite wenigstens eines der Substrate ausgebildet ist.

9. Elektronische Vorrichtung nach Anspruch 2, bei der der Flüssigkristall, der in dem Anzeigeelement verwendet wird, folgende Verbindung enthält: 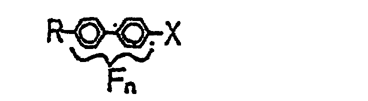 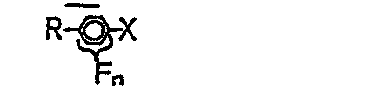 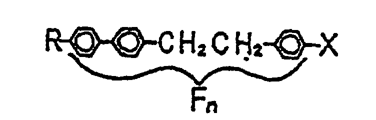 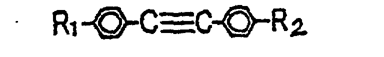 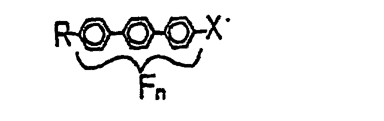 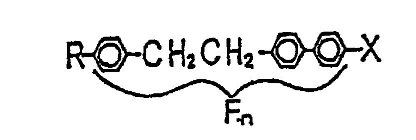 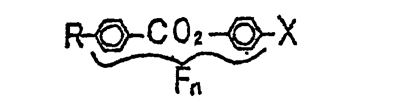 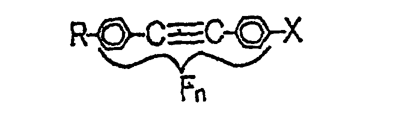 wobei n eine ganze Zahl ist; R eine Alkyl-, Alkoxy-, Cycloalkyl- oder Cycloalkoxy-Gruppe repräsentiert; R1 und R2 unabhängig eine Alkyl-, Cycloalkyl-, Alkoxy- oder Cycloalkoxy-Gruppe oder H oder F repräsentieren; X H, F, Cl oder CN repräsentiert.

10. Elektronische Vorrichtung nach Anspruch 2, bei der das im Anzeigeelement verwendete Polymer vorbereitet wird durch Polymerisation des folgenden Polymervorläufers als wenigstens eine Komponente: 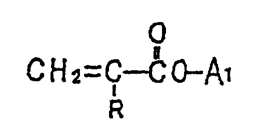 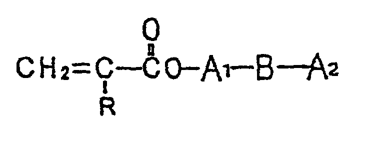 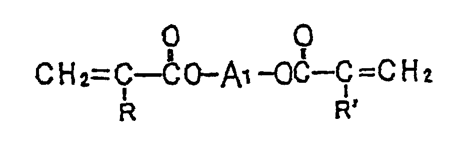 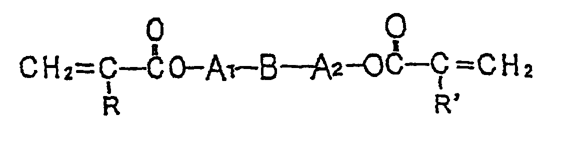 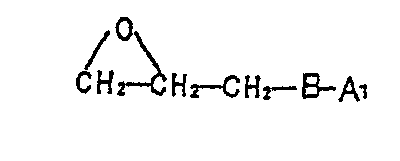 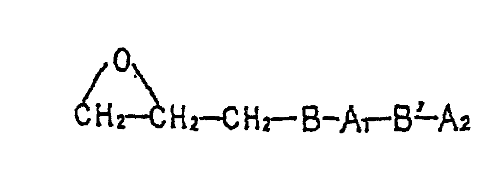 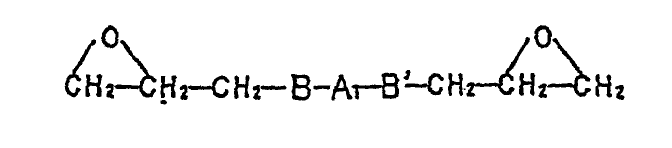 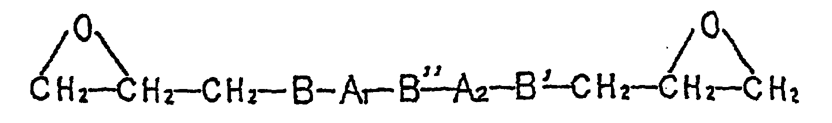 wobei R und R' unabhängig H oder CH₃ repräsentieren; B, B' und B" unabhängig OCO, COO, OCONH, NHCOO, CONH, NHCO, -C≡C-, eine Alkylgruppe, O, N, oder S repräsentieren; A1 und A2 unabhängig eine Gruppe repräsentieren, die einen aromatischen Ring enthält, wie z. B. Phenyl, Biphenyl, Terphenyl, Quaterphenyl, Naphthalen und Anthrazen, und die ersetzt werden kann durch Halogene, eine Alkylgruppe und eine Cyanogruppe.

11. Elektronische Vorrichtung nach irgendeinem der vorangehenden Ansprüche, wobei das Anzeigeelement das Deckglas der Anzeigevorrichtung bildet.

## Revendications

1. Dispositif électronique comprenant :
un dispositif d'affichage pour afficher une première information ; et
un élément d'affichage pour afficher une deuxième information, où ledit élément d'affichage est adapté pour devenir transparent en l'absence d'un champ électrique appliqué et pour présenter un état de dispersion de la lumière en présence d'un champ électrique prédéterminé appliqué aux bornes de l'élément et où ledit élément d'affichage est superposé sur ledit dispositif d'affichage.

2. Dispositif électronique selon la revendication 1, dans lequel ledit élément d'affichage est préparé par disposition d'une solution mixte de polymère ou de précurseur de polymère avec un cristal liquide entre une paire d'électrodes dans un état cristal liquide et ensuite réalisation d'une séparation de phases du polymère d'avec le cristal liquide par des moyens de séparation de phases.

3. Dispositif électronique selon la revendication 1 ou la revendication 2, dans lequel une couche de renforcement de réflexion est placée sur le côté envers dudit élément d'affichage.

4. Dispositif électronique selon la revendication 3, dans lequel ladite couche de renforcement de réflexion est faite en un matériau transparent.

5. Dispositif électronique selon la revendication 1, dans lequel un élément à cristaux liquides équipé de moyens d'application de champ électrique et contenant un colorant dichroïque est placé entre ledit élément d'affichage et ledit dispositif d'affichage.

6. Dispositif électronique selon l'une quelconque des revendications précédentes, dans lequel un traitement anti-éblouissant et/ou un traitement anti-réfléchissant est appliqué audit élément d'affichage sur une surface d'un côté adapté pour être regardé par un observateur pour visualiser ladite deuxième information.

7. Dispositif électronique selon la revendication 2, dans lequel ledit élément d'affichage comprend des premier et deuxième substrats respectivement disposés sur l'un ou l'autre côté desdits polymère et cristal liquide ayant subi une séparation de phases et dans lequel un filtre couleur est formé sur un côté en contact avec le cristal liquide d'au moins l'un ou l'autre desdits substrats.

8. Dispositif électronique selon la revendication 2, dans lequel ledit élément d'affichage comprend des premier et deuxième substrats respectivement disposés sur l'un ou l'autre côté desdits polymère et cristal liquide ayant subi une séparation de phases et dans lequel un élément actif est formé sur un côté en contact avec le cristal liquide d'au moins l'un ou l'autre desdits substrats.

9. Dispositif électronique selon la revendication 2, dans lequel le cristal liquide utilisé dans ledit élément d'affichage contient le composé suivant : 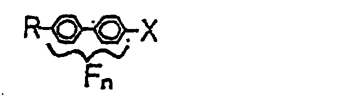 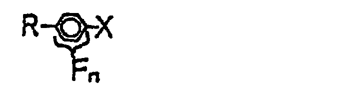 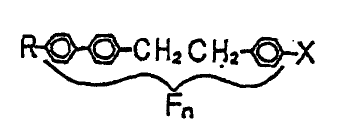 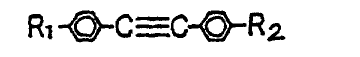 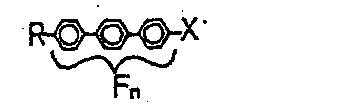 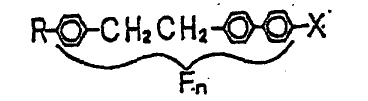 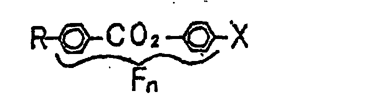 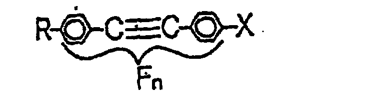 où n est un entier ; R représente un groupe alkyle, alcoxy, cycloalkyle ou cycloalcoxy ; R1 et R2 représentent indépendamment un groupe alkyle, cycloalkyle, alcoxy ou cycloalcoxy, ou H ou F ; X représente H, F, Cl ou CN.

10. Dispositif électronique selon la revendication 2, dans lequel le polymère utilisé dans ledit élément d'affichage est préparé par polymérisation du précurseur de polymère suivant à titre d'au moins un composant : 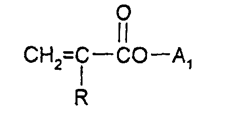 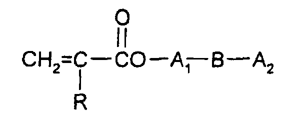 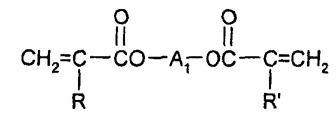 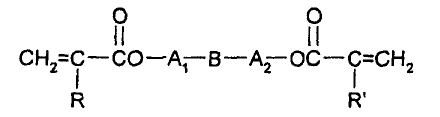 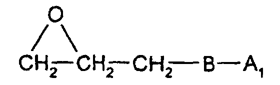 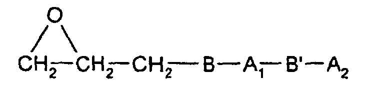 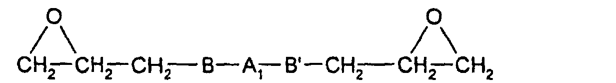 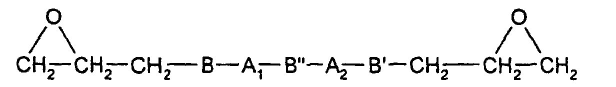 où R et R' représentent indépendamment H ou CH₃ ; B, B' et B" représentent indépendamment OCO, COO, OCONH, NHCOO, CONH, NHCO, -C≡C-, un groupe alkyle, O, N ou S ; A1 et A2 représentent indépendamment un groupe contenant un cycle aromatique, tel que phényle, biphényle, terphényle, quaterphényle, naphtalène et anthracène, et peuvent être substitués par des halogènes, un groupe alkyle et un groupe cyano.

11. Dispositif électronique selon l'une quelconque des revendications précédentes, dans lequel l'élément d'affichage forme le verre de protection du dispositif d'affichage.
